# EUROPEAN PATENT APPLICATION

(11) **EP 4 718 796 A1**
(43) Date of publication of application: **01.04.2026**
(21) Application number: 25186338.7
(22) Date of filing: 30.06.2025
(51) Int. Cl.: H04L 41/044, H04L 41/12, H04L 41/22

(54) **USER INTERFACE WITH INDEPENDENTLY SCROLLING LAYERS**

(30) Priority: 25.09.2024 US 202463699149 P; 13.02.2025 US 202519053200
(71) Applicant: Juniper Networks, Inc., Sunnyvale, CA 94089-1206 (US)
(72) Inventor: GOGNA, Jomana Sherif, Sunnyvale, 94089 (US); KELLEHER, Rebecca Rose, Sunnyvale, 94089 (US); JOSHI, Mansi, Sunnyvale, 94089 (US); SUBRAMANIAN, Rasika, Sunnyvale, 94089 (US); MOGHE, Atul S, Sunnyvale, 94089 (US); MIRIYALA, Prasad, Sunnyvale, 94089 (US)
(74) Representative: D Young & Co LLP

(57) **Abstract**

A user interface as described herein provides improved visibility of the network topology of a network, including for complex and large-scale networks. In one example, a computing system outputs, for display at a display device, a user interface comprising an arrangement of icons into layers. Each icon of the icons corresponds to a network element of network elements of a network system, and each layer of the layers corresponding to a topological layer of the network system. Based at least in part on an indication of user input, the system modifies the arrangement by performing a geometric translation of first icons of the icons arranged into one or more first layers of the layers, without performing a geometric translation of second icons arranged into one or more second layers of the layers. The system outputs, for display at the display device, the user interface comprising the modified representation.

## Description

This application claims the benefit of US Patent Application No. 19/053,200, filed 13 February 2025; and claims the benefit of US Provisional Patent Application No. 63/699,149, filed 25 September 2024; the entire content of each application is incorporated herein by reference.

### TECHNICAL FIELD

The disclosure relates to computer networks, and more particularly, to management of network devices.

### BACKGROUND

A computer network is a collection of interconnected computing devices that can exchange data and share resources. A variety of devices operate to facilitate communication between the computing devices. For example, a computer network may include routers, switches, gateways, firewalls, and a variety of other devices to provide and facilitate network communication.

These network devices typically include mechanisms, such as management interfaces, for locally or remotely configuring the devices. By interacting with the management interface, a client can perform configuration tasks as well as perform operational commands to collect and view operational data of the managed devices. For example, the client may configure interface cards of the device, adjust parameters for supported network protocols, specify physical components within the device, modify routing information maintained by a router, access software modules and other resources residing on the device, and perform other configuration tasks. In addition, the client may allow a user to view current operating parameters, system logs, information related to network connectivity, network activity or other status information from the devices as well as view and react to event information received from the devices.

Network configuration services may be performed by multiple distinct devices, such as routers with service cards and/or dedicated service devices. Such services include connectivity services such as Layer Three Virtual Private Network (L3VPN), Virtual Private Local Area Network Service (VPLS), and Peer to Peer (P2P) services. Other services include network configuration services, such as Dot1q VLAN Service. Network management systems (NMSs) and NMS devices, also referred to as controllers or controller devices, may support these services such that an administrator (e.g., a network administrator) can easily create and manage these high-level network configuration services.

### SUMMARY

**In** accordance with the techniques of the disclosure, a system includes a user interface that provides improved visibility of a network topology of network elements within a network system, such as a datacenter. The user interface may allow a user to maintain a complete view of the network elements across the network topology, including for networks that have arbitrarily large scale or complexity.

In some examples, a system as described herein outputs, for display at a display device, a user interface. The user interface comprises icons, each icon corresponding to a network element of a network system. In addition, the icons are arranged into multiple layers, each layer corresponding to a topological layer of the network elements within the network system. For example, the network topology may include one or more topological layers including: (1) a spine layer that includes one or more spine network devices of the network elements; (2) a leaf layer that includes one or more leaf network devices of the network elements; (3) a host layer that includes one or more host computing devices of the network elements; or (4) a virtualization, application, client, and/or services layer that includes one or more client applications or services executing on the network elements. Other types of network topologies can also be used with the system. Further, the user interface includes one or more lines that depict logical connections between the network elements of the network system.

Based at least in part on an indication of user input, the system modifies the arrangement of icons by performing a geometric translation of one or more first layers of icons, without performing a geometric translation of the icons of one or more second layers of icons. For example, the user may use an input device to "drag" the one or more first layers to reposition the icons of the one or more first layers horizontally within the arrangement, while maintaining the position of icons of one or more second layers within the arrangement. Further, the system adjusts the one or more lines to maintain the depiction of the logical connections among the network elements of the network system. The system outputs, for display to the user, the user interface comprising the modified arrangement of the icons.

The techniques of the disclosure may provide specific technical improvements to the computer-related field of network management, orchestration, administration, and deployment that may have one or more practical applications. The techniques may also provide specific technical improvements to the computer-related filed of user interfaces. For example, the techniques disclosed herein may enable a user, such as a network administrator or datacenter administrator, to more effectively navigate the network topology of a network, even for networks having extreme complexity or high numbers of network elements. The techniques of the disclosure may enable such user focusing on individual network elements, a particular topological layer of the network system, or a subset of the network topology to maintain an understanding of the relationship or context between the subset of the network topology and the greater network topology as a whole, thereby increasing understanding of the interrelationships between the various network elements within the network topology. The techniques of the disclosure may increase the ease by which a user may understand the network topology, navigate various network elements within the network topology, and understand the context of the network topology. Therefore, the techniques of the disclosure may reduce the difficulty of troubleshooting and failure remediation within a network and streamline deployment and maintenance of the network, even for networks of arbitrarily large scale or complexity.

In one example, this disclosure describes a computing system comprising processing circuitry having access to a memory, the processing circuitry configured to: output, for display at a display device, a user interface comprising an arrangement of icons into layers, wherein each icon of the icons corresponds to a network element of network elements of a network system, and wherein each of the layers corresponds to a topological layer of topological layers of the network elements within the network system; based at least in part on an indication of user input, modify the arrangement of icons by performing a geometric translation of first icons of the icons arranged into one or more first layers of the layers without performing a geometric translation of second icons arranged into one or more second layers of the layers; and output, for display at the display device, the user interface comprising the modified arrangement of icons.

In another example, this disclosure describes a method comprising: outputting, by processing circuitry of a computing system, for display at a display device, a user interface comprising an arrangement of icons into layers, wherein each icon of the icons corresponds to a network element of network elements of a network system, and wherein each of the layers corresponds to a topological layer of topological layers of the network elements within the network system; based at least in part on an indication of user input, modifying, by the processing circuitry, the arrangement of icons by performing a geometric translation of first icons of the icons arranged into one or more first layers of the layers without performing a geometric translation of second icons arranged into one or more second layers of the layers; and outputting, by the processing circuitry and for display at the display device, the user interface comprising the modified arrangement of icons.

In another example, this disclosure describes computer-readable media encoding instructions that, when executed, cause processing circuitry to: output, for display at a display device, a user interface comprising an arrangement of icons into layers, wherein each icon of the icons corresponds to a network element of network elements of a network system, and wherein each of the layers corresponds to a topological layer of topological layers of the network elements within the network system; based at least in part on an indication of user input, modify the arrangement of icons by performing a geometric translation of first icons of the icons arranged into one or more first layers of the layers without performing a geometric translation of second icons arranged into one or more second layers of the layers; and output, for display at the display device, the user interface comprising the modified arrangement of icons.

In another example, this disclosure describes a computing system comprising processing circuitry having access to a memory, the processing circuitry configured to: output, for display at a display device, a user interface comprising: a first horizontal layer comprising first icons, wherein the first horizontal layer corresponds to a spine layer of topological layers of network elements within a network system and the first icons correspond to spine network devices of the network elements within the network system; a second horizontal layer comprising second icons, wherein the second horizontal layer corresponds to a leaf layer of the topological layers of the network elements within the network system and the second icons correspond to leaf network devices of the network elements within the network system; a third horizontal layer comprising third icons, wherein the third horizontal layer corresponds to a host layer of the topological layers of the network elements within the network system and the third icons correspond to host computing devices of the network elements within the network system; a fourth horizontal layer comprising fourth icons, wherein the fourth horizontal layer corresponds to a virtualization layer of the topological layers of the network elements within the network system and the fourth icons correspond to client applications or services of the network elements within the network system; and one or more lines interconnecting one or more of the second icons with one or more of the first icons, the third icons, and the fourth icons, the one or more lines corresponding to logical connections between the network elements; and based at least in part on an indication of user input: performing a horizontal geometric translation of only the second icons of the second layer without performing a horizontal geometric translation of the first icons of the first layer, the third icons of the third layer, or the fourth icons of the fourth layer; and adjusting the one or more lines to maintain the interconnections between the one or more of the second icons with the one or more of the first icons, the third icons, and the fourth icons; and output, for display at the display device, the modified user interface.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example including elements of an enterprise network that are managed using a controller device, according to techniques of this disclosure.
FIG. 2 is a block diagram illustrating an example set of components for the controller device of FIG. 1, according to techniques of this disclosure.
FIG. 3 is an illustration depicting an example user interface in accordance with the techniques of the disclosure.
FIG. 4 is an illustration depicting an example user interface in accordance with the techniques of the disclosure.
FIGS. 5A-5C are block diagrams illustrating an example user interface in accordance with the techniques of the disclosure.
FIG. 6 is an illustration depicting an example user interface in accordance with the techniques of the disclosure.
FIGS. 7A-7C are block diagrams illustrating an example user interface in accordance with the techniques of the disclosure.
FIG. 8 is a flowchart illustrating an example operation in accordance with the techniques of the disclosure.
FIG. 9 is an illustration depicting an example user interface in accordance with the techniques of the disclosure.

Like reference characters refer to like elements throughout the figures and description.

### DETAILED DESCRIPTION

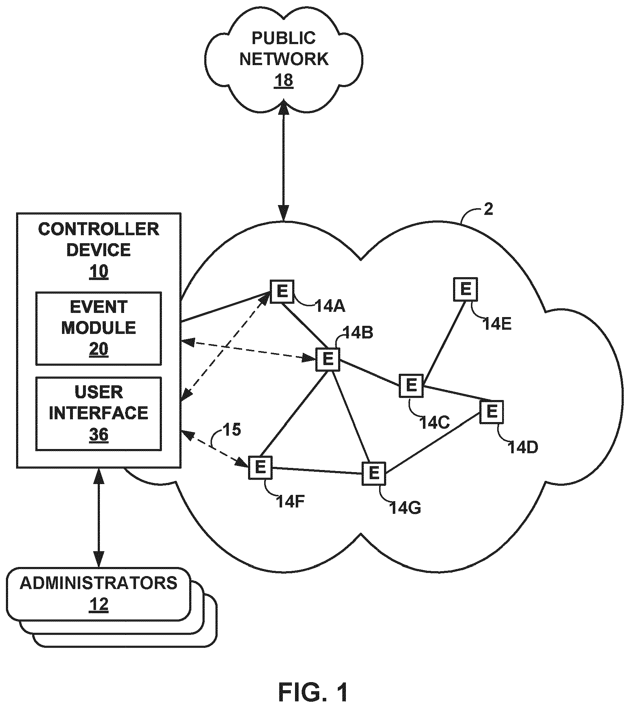

FIG. 1 is a block diagram illustrating an example including elements of an enterprise network 2 that are managed using a controller device 10. Managed nodes or elements 14A-14G (collectively, "elements 14" or "network devices 14") of enterprise network 2 include network devices interconnected via communication links to form a communication topology in order to exchange resources and information. Elements 14 (also generally referred to as network devices or remote network devices) may include, for example, routers, switches, gateways, bridges, hubs, servers, firewalls, or other intrusion detection systems (IDS) or intrusion prevention systems (IDP), computing devices, computing terminals, printers, other network devices, or a combination of such devices. While described in this disclosure as transmitting, conveying, or otherwise supporting packets, enterprise network 2 may transmit data according to any discrete data unit defined by any protocol, such as, for example, Ethernet, a cell defined by the Asynchronous Transfer Mode (ATM) protocol, Transmission Control Protocol (TCP), or a datagram defined by the User Datagram Protocol (UDP). Communication links interconnecting elements 14 may be physical links (e.g., optical, copper, and the like), wireless, or any combination thereof.

Enterprise network 2 is shown coupled to public network 18 (e.g., the Internet) via a communication link. Public network 18 may include, for example, one or more client computing devices. Public network 18 may provide access to web servers, application servers, public databases, media servers, end-user devices, and other types of network resource devices and content.

Controller device 10 is communicatively coupled to elements 14 via enterprise network 2. Controller device 10, in some examples, forms part of a device management system or "system", although only one device of the device management system is illustrated for purpose of example in FIG. 1. Controller device 10 may be coupled either directly or indirectly to the various elements 14. Once elements 14 are deployed and activated, administrator 12 uses controller device 10 to manage the network devices using a device management protocol. One example device protocol is the Simple Network Management Protocol (SNMP) that allows controller device 10 to traverse and modify management information bases (MIBs) that store configuration data within each of managed elements 14. Further details of the SNMP protocol can be found in Harrington et al., RFC 3411, "An Architecture for Describing Simple Network Management Protocol (SNMP) Management Frameworks," Network Working Group, the Internet Engineering Task Force draft, December 2002, available at http://tools.ietf.org/html/rfc3411, the entire contents of which are incorporated herein by reference.

Controller device 10, also referred to herein as a network management system (NMS) or NMS device, and elements 14 are centrally maintained by an IT group of the enterprise. Administrator 12 interacts with controller device 10 to remotely monitor and configure elements 14. For example, administrator 12 may receive alerts from controller device 10 regarding any of elements 14, view configuration data of elements 14, modify the configurations data of elements 14, add new network devices to enterprise network 2, remove existing network devices from enterprise network 2, or otherwise manipulate the enterprise network 2 and network devices therein. Although described with respect to an enterprise network, the techniques of this disclosure are applicable to other network types, public and private, including LANs, VLANs, VPNs, and the like.

Event module 20 of controller device 10 may receive events (e.g., deployment changes, login success/failure, logout, commit changes, etc.) and store event information for each event in one or more event stores. Some events may be configuration changes associated with network information, such as configuration information. For example, a deployment change event may include network information comprising configuration instructions and/or a configuration string (e.g., configuration information) for one or more network devices 14. Rather than storing event information including the network information, event module 20 may store the event information with a pointer to the network information.

A variety of events may occur in connection with network 2 and the components thereof, such as network devices 14. For example, when controller device 10 commits a configuration change to a network device 14 (e.g., stores the configuration change at a data store, such as a computer-readable storage media), controller device 10 may generate a commit change event. In some examples, controller device 10 may generate a configuration change when receiving a change to the intent graph for network 2, such as from administrator 12. A commit change event may accordingly occur when controller device 10 commits a change or a plurality of changes to the intent graph (e.g., stores the change at a data store). Controller device 10 may include network information having updated configuration information for one or more network devices 14 updated by the configuration or intent graph change in the commit change.

A deployment change event may occur when a configuration change is deployed to network 2 or a component thereof, such as network devices 14. For instance, controller device 10 may generate a deployment change event when controller device 10 deploys an intent graph model to network devices 14. Similar to the above example, a deployment change event may also include network information. For example, controller device 10 may include network information having updated configuration information as deployed to network devices 14 or other components of network 2 in a deployment change event. As used herein, a configuration change may include, for example, a commit change (which may include a bundle of one or more changes), a deployment change, or other event generated in response changing a configuration of network devices 14 or other components of network 2.

Event module 20 may store telemetry information (e.g., device telemetry or metrics) associated with an event. For example, controller device 10 may determine whether an event has occurred based on telemetry information. For instance, controller device 10 may determine that a device metric event has occurred in response to an interface up/down event for network device 14, an interface error event indicating an error has occurred at the interface, or an interface counter event indicating the number of bytes transferred by the interface or the number of errors that have occurred at the interface.

Events may occur periodically or be event driven. For example, periodic events may occur at one or more predefined periods (e.g., every 10 seconds or every minute) and provide periodic data such as a count of bytes that have been transmitted or errors that have occurred/accumulated at a particular interface of network device 14. Event driven events may occur when an event occurs. For example, login success/failure or logout events may occur at the time a login or logout is attempted, succeeds, or fails. An interface up/down event or interface error event may occur when an interface goes up or down or when the interface experiences a communication error. Not all events may include network information. For example, login and logout events may simply indicate administrator 12 has logged in or logged out without network information (e.g., without configuration information or telemetry information).

Controller device 10 may store network information in one or more data stores. A data store may include computer-readable storage media. For example, an intent store and/or a telemetry store may store network information. For instance, event module 20 may identify the objects storing network information (for an event) at a data store and generate a pointer to the objects. In this example, event module 20 may include the pointer in the event information and store the event information in an event store without the network information. In some examples, event module 20 may replace the network information with the pointer and store event information including the pointer and excluding the network information in an event store. Excluding the network information may allow event module 20 to reduce an amount of storage required to store events and/or allow controller device 10 to avoid limiting an event store to a maximum number of events (e.g., 10,000).

As described above, an event may not be associated with network information. For example, configuration information may not be relevant to a login success/failure or logout event and accordingly may not be included with these events. As such, event module 20 may, in some examples, determine whether an event includes network information before storing event information.

In some examples, network information may be identified by one or more identifiers, such as a name (e.g., "device_config") or other identifier associated with an event. A network information identifier may be a signature or pattern to which network information conforms (e.g., a data format or regular expression). Certain event types may not include network information and, accordingly, a network information identifier may be an event type in some examples. Event module 20 may thus determine an event includes network information when a network information identifier is present and determine an event does not include network information when a network information indicator is not present.

Responsive to determining that network information is not included, event module 20 may, in some examples, simply store a complete copy of the event information. For example, event module 20 may store a complete copy of login success/failure and logout events in an event store. When event module 20 determines an event is associated with network information, event module 20 may store event information including a pointer to network information and not including the network information, such as described above.

In some examples, event module 20 may determine whether network information satisfies one or more criteria before storing event information. For example, in some cases, network information including telemetry information may be relatively small in size (e.g., 5 kb) compared to network information including device configuration information (e.g., 1 MB). As such, in some examples event module 20 may determine and compare an amount of network information relative to a threshold size (e.g., 100 kb) to determine whether to store event information including a pointer to the network information or event data including the network information.

Certain categories of network information may be stored as part of event information in some examples. For example, event module 20 may determine whether event information includes network information of a particular category. Event module 20 may store the event information including the network information or including a pointer to the network information based on the determination. For instance, event module 20 may store first telemetry information directly in the event store in response to determining that the first telemetry information is less than a threshold value (e.g., 1 kB). In this example, event module 20 may store a pointer specifying second telemetry information stored outside the event store (e.g., in a telemetry database) in response to determining that the second telemetry information is greater than a threshold value (e.g., 1 MB).

Event module 20 may receive events from various sources, including from controller device 10 or a component thereof. For example, event module 20 may receive a configuration change event from controller device 10, such as when an administrator 12 makes an intent change to network 2 via controller device 10 or a component thereof. Event module 20 may receive events associated with one or more network devices 14, such as from controller device 10 or a component thereof. For example, as the result of a commit change (e.g., storage of an intent change) relative to element 14A at controller device 10, controller device 10 may generate a configuration change event including network information (e.g., a configuration string) for element 14A. In some examples, event module 20 may receive events from elements 14 of network 2. For example, event module 20 may receive a login success/failure or logout event, without network information, from element 14B when administrator 12 logs in or logs out of element 14B.

Event module 20 may retrieve event information, such as, for example, in response to receipt of one or more queries. For example, event module 20 may receive a query from an administrator 12 to locate particular event information in an event store. As described above, event module 20 may provide the capability to store extensive event logs (e.g., 4 or more weeks of events regardless of the rate at which events occur) in an event store. Event module 20 may retrieve event information from the event store that satisfies one or more parameters or criteria in the query and present the query results (e.g., event information and/or configuration information) to administrator 12. The query results may be used to aid in the identification of a change or other event that resulted in a network anomaly or fault.

Administrator 12 may utilize the query results alone or in combination with other information available via controller device 10, such as historical configuration information (e.g., intent graph models) or historical telemetry information (e.g., device metrics) to diagnose a network anomaly or fault. For example, related historical configuration information may be replayed along with or in addition to related historical telemetry information. Controller device 10 may identify the related historical configuration information and/or historical telemetry information from the event information in the query results (e.g., a time an event occurred).

In some examples, administrator 12 uses controller device 10 or a local workstation to interact directly with elements 14 (e.g., through telnet, secure shell (SSH), or other such communication sessions). That is, elements 14 generally provide interfaces for direct interaction, such as command line interfaces (CLIs), web-based interfaces, graphical user interfaces (GUIs), or the like, by which a user can interact with the devices to directly issue text-based commands. Examples of interfaces using text-based commands may include one or more of NX-API^{™}, Arista EOS^{™}, Juniper Telemetry Interface^{™}, and gNMI telemetry collection interface. For example, these interfaces typically allow a user to interact directly with the device (e.g., through a telnet, secure shell (SSH), hypertext transfer protocol (HTTP), or other network session) to enter text in accordance with a defined syntax to submit commands to the managed element. In some examples, the user initiates an SSH session 15 with one of elements 14 (e.g., element 14F) using controller device 10, to directly configure element 14F. In this manner, a user can provide commands in a format for execution directly to elements 14.

Further, administrator 12 can also create scripts that can be submitted by controller device 10 to any or all of elements 14. For example, in addition to a CLI interface, elements 14 also provide interfaces for receiving scripts that specify the commands in accordance with a scripting language. In a sense, the scripts may be output by controller device 10 to automatically invoke corresponding remote procedure calls (RPCs) on the managed elements 14. The scripts may conform to (e.g., extensible markup language (XML)) or another data description language.

Administrator 12 uses controller device 10 to configure elements 14 to specify certain operational characteristics that further the objectives of administrator 12. For example, administrator 12 may specify for an element 14 a particular operational policy regarding security, device accessibility, traffic engineering, quality of service (QoS), network address translation (NAT), packet filtering, packet forwarding, rate limiting, or other policies. Controller device 10 uses one or more network management protocols designed for management of configuration data within managed network elements 14, such as the SNMP protocol or the Network Configuration Protocol (NETCONF) protocol or a derivative thereof, such as the Juniper Device Management Interface, to perform the configuration. In general, NETCONF provides mechanisms for configuring network devices and uses an Extensible Markup Language (XML)-based data encoding for configuration data, which may include policy data. NETCONF is described in Enns, "NETCONF Configuration Protocol," Network Working Group, RFC 4741, Dec. 2006, available at tools.ietf.org/html/rfc4741, the entire contents of which are incorporated herein by reference. Controller device 10 may establish NETCONF sessions with one or more of elements 14.

A user "intent" may represent a single source of truth, from which device configurations are derived. An intent-based networking system may help to allow administrators to describe the intended network/compute/storage state. Intents may represent a state and may be persisted across system restarts so the user does not lose the source of truth for their network's management and operation. For example, suppose the intent starts with a network topology definition with servers connected to leaf switches, where the servers host user workloads. In this example, traffic between the servers could vary over time and/or hotspots could develop in the network. For instance, a workload could be deployed on two different racks of servers causing the traffic between the communicating processes to traverse an oversubscribed fabric. Telemetry may be used to detect the oversubscription and the workload distribution may then be updated so that endpoints get moved to the same rack, hence minimizing the use of oversubscribed links in the fabric. In this example, the intent could be modeling the policy of how widely distributed (e.g., how many racks) a workload's endpoint could be spread across, and/or how much fabric links are supposed to be used by this workload. In this way, the policy could be updated based on the current network state.

Intents may be represented as data models, such as intent graph models, which may be modeled using unified graphs. Intent graph models may be represented as connected graphs, so that business policies can be implemented across intent graph models. For example, intent graph models may be represented using connected graphs having vertices connected with has-edges and reference (ref) edges. Controller device 10 may model intent graph models as unified graphs, so that the intent graph models can be represented as connected. In this manner, business policies can be implemented across intent graph models. When intents are modeled using a unified intent graph model, extending new intent support needs to extend the intent graph model and compilation logic.

Controller device 10 may be configured to accept high-level configuration data, or intents, from administrator 12 (which may be expressed as structured input parameters (e.g., according to YANG which is described in Bjorklund, "YANG-A Data Modeling Language for the Network Configuration Protocol (NETCONF)," Internet Engineering Task Force, RFC 6020, Oct. 2010, available at tools.ietf.org/html/rfc6020)).

In order to configure devices to perform the intents, a user (such as an administrator 12) may write translation programs that translate high-level configuration instructions (e.g., instructions according to an intent graph model, which may be expressed as a unified graph model) to low-level configuration instructions (e.g., instructions according to a device configuration model). As part of configuration service support, administrator 12 may provide the intent graph model and a mapping between the intent graph model to a device configuration model.

Controller device 10 may be configured to output respective sets of low-level device configuration data (e.g., device configuration additions, modifications, and removals). Additional details regarding an example process for translating high level configuration information to low-level device configuration information can be found in, e.g., Jiang et al., "TRANSLATING HIGH-LEVEL CONFIGURATION INSTRUCTIONS TO LOW-LEVEL DEVICE CONFIGURATION," U.S. Patent Application No. 15/198,657, filed June 30, 2016, the entire contents of which are hereby incorporated by reference. This disclosure refers to low-level device configuration produced from intents (e.g., produced by compiling or translating the intents) as "device-level intent configuration information" or "intent configuration," to distinguish this device-level configuration from out of band (OOB) device-level configuration. In some examples, controller device 10 may use YANG modeling for an intent graph model and low-level device configuration models. This data may contain relations across YANG entities, such as list items and containers. In some examples, controller device 10 may convert a YANG data model into a database model and convert YANG validations into data validations. Techniques for managing network devices using a graph model for high level configuration data is described in "CONFIGURING AND MANAGING NETWORK DEVICES USING PROGRAM OVERLAY ON YANG-BASED GRAPH DATABASE," U.S. Patent Application No. 15/462,465, filed March 17, 2017, the entire contents of which are hereby incorporated by reference.

Controller device 10 may receive data from one of administrators 12 representing any or all of create, update, and/or delete actions with respect to the intent graph model. Controller device 10 may be configured to use the same compilation logic for each of create, update, and delete as applied to the graph model.

In general, controllers like controller device 10 may use a hierarchical data model for intents, low-level data models, and resources. The hierarchical data model can be based on YANG or YAML. The hierarchical data model can be represented as a graph, as discussed above. Use of intents may ease the management of networks and intents are declarative. To realize intents, controller device 10 may attempt to select optimal resources from elements 14 and/or from other devices.

In general, controller device 10 may be configured to translate high-level configuration (e.g., intents received from an administrator for a plurality of managed network devices) to low-level configuration, which may also be referred to herein as "device-level configuration" (to be applied to the managed network devices themselves). In some instances, controller device 10 may receive an indication of a topology and a role for element 14A and generate device-level configuration information for element 14A. For example, administrator 12 may select a topology and role for element 14A and provide an intent. In some examples, controller device 10 may generate device-level configuration for element 14A based on the role (e.g., spine or leaf) of element 14A in the topology (e.g., a spine and leaf topology), the topology, and the intent.

Controller device 10 may store and "replay" intent graph models to allow administrator 12 to view previously deployed intent graph models, such as to diagnose or repair network anomalies or faults. As used herein, a "replay" of intent graph models may include reproducing an intent graph model previously deployed at elements 14 when another intent graph model is currently deployed at elements 14. In some examples, controller device 10 stores intent graph models currently deployed and/or previously deployed at elements 14. Referring to the example of FIG. 1 for instance, an intent graph model for network 2 may store elements or nodes 14 representing components of network 2 and communication links or edges representing connections between nodes. Controller device 10 may replay intent graph models for a particular period of time by retrieving and presenting the intent graph models of network 2 over the period of time. For example, controller device 10 may generate data representing a user interface presenting one or more intent graph models and output, for display, the data representing the user interface. Administrators 12 may utilize a replay to view changes of an intent graph model over time, such as to diagnose or repair network anomalies or faults.

In some examples, controller device 10 may store intent graph models as snapshots and difference information rather than storing individual snapshots. A snapshot of an intent graph model may include all the data (e.g., a state for each interface) for the intent graph model while difference information includes one or more changes to an intent graph model without some data stored by a snapshot. For example, controller device 10 may store difference information for a current intent graph model without data that remains constant in an intent graph model that was deployed at elements 14 immediately before the current intent graph model.

For instance, controller device 10 may store a snapshot for an intent graph model representing a complete state of network 2, which includes a representation of nodes 14, and the communication links thereof. If a commit change to the intent graph model is provided by administrators 12, for example, by deleting a communication link, controller device 10 may store difference information for the change to indicate the deletion of the communication link without information about other elements 14 or communication links of network 2.

Difference information may help to reduce storage and processing requirements for storing and retrieving intent graph models. For example, at a first day of implementing network devices, such as at a datacenter, controller device 10 may store a snapshot of an entire intent graph model. On a subsequent second day, a network administrator may add a new rack (e.g., 40 servers, 2 new leaves, etc.). In this example, difference information representing the new rack, is stored rather than another snapshot of the entire intent graph model. Controller device 10 may then generate an intent graph model for the second day using the first day snapshot and the second day difference information by applying the second day difference information to the first day snapshot. As can be seen from this example, the resource requirements may be significantly reduced using difference information. For example, the snapshot may be over 2 GBs while difference information may be substantially less, such as less than 1 kB. The second day difference information can therefore be much more rapidly retrieved and loaded, such as to local storage, as compared to a snapshot for the second day. Controller device 10 may store snapshots and difference information in one or more objects, such as on a computer-readable storage media.

In some embodiments, in response to an event, such as a configuration change event, controller device 10 may store event information that specifies an object storing difference information (e.g., updated configuration information) generated by the configuration change. For example, controller device 10 may store event information including a pointer to the object. In this manner, controller device 10 may preserve (e.g., store) network information for the event in a snapshot or difference information using a separate data store without storing a complete and duplicate copy in an event store.

In addition to replaying intent graph models, controller device 10 may be configured to replay historical metrics for network devices 14 relative to one or more intent graph models. For example, controller device 10 may receive a query indicating a time and, optionally, a network service managed by controller device 10. For instance, controller device 10 may receive the query from administrator 12 indicating a time (e.g., 6 PM Friday to 6 AM Saturday) for which the administrator is interested in understanding the state of the network. The time indicated in the query may be a single point in time, or a time range. In this example, controller device 10 may select an intent graph, from a plurality of intent graphs for network 2, that is associated with a time range that includes the time indicated by the query. For example, the controller device 10 may select an intent graph that was implemented by controller device 10 at the time indicated by the query (e.g., at 6 PM Friday). In some examples, each intent graph of the plurality of intent graphs includes nodes representing components of network 2 and edges representing connections between the nodes and each intent graph of the plurality of intent graphs is associated with a corresponding different time range (e.g., a first intent graph is from 6 PM Monday to 3 PM Wednesday and a second intent graph is from 3 PM Wednesday to 5 PM Friday). In some examples, the different time ranges are non-overlapping time ranges, in which any given time is included in only a single time range, and thus is associated with only a single intent graph. In some examples, if the time range spans over two intent graphs, controller device 10 may select a first intent model that was implemented at the beginning of the time range. In this example, controller device 10 may select a second intent model that was implemented at a time during the time range when the first intent model was changed to the second intent model.

Controller device 10 may determine a subset of telemetry data, from a database of telemetry data received from a set of network devices of network 2 over the time period that corresponds to the time range using the time indicated by the query and the network service indicated by the query. For example, controller device 10 may determine telemetry data measured by network devices 14 while controller device 10 implemented the selected graph model and at the time indicated by the query.

Controller device 10 may perform a network analysis operation using the selected intent graph and the subset of the telemetry data to generate one or more metrics. The selected intent graph may indicate an intended or desired state of a network, while the telemetry data indicates the actual state of the network in operation at one or more times. For example, controller device 10 may output the selected intent and the subset of telemetry data to a root cause fault engine (e.g., included in controller device 10 or outside of controller device 10) and the root cause fault engine outputs the one or more metrics as, for example, one or more candidate root cause faults. A root cause fault may refer to one or more issues that cause symptoms and impacts. Symptoms may be observable (e.g., using device telemetry) and may be used to match root cause faults. Impacts may refer to causal consequences of root cause faults but may not be observable. For example, a root cause fault may be a link being down (e.g., a cable is broken). In this example, symptoms may include telemetry data indicating, for example, interfaces on both ends of a link being operationally down and/or no neighbor reported for both interfaces and the impact may include degraded network bandwidth for services whose traffic could have used the down link. In some examples, the selected intent may be an intent graph model generated using difference information as described herein.

In some examples, controller device 10 may output the selected intent and the subset of telemetry data to an analytics engine and the analytics engine outputs the one or more metrics as, for example, one or more of an intent-based analytics alert, an average alignment of errors per second for a network device 14A, an average Frame Check Sequence (FCS) errors per second for network device 14A, an average number of received bits per second for network device 14A, or an average transmitted bits per second for network device 14A.

Controller device 10 may output an indication of the one or more metrics. For example, controller device 10 may generate data representing a user interface presenting the one or more metrics and output, for display, the data representing the user interface. As another example, controller device 10 may output the indication of the one or more metrics as a text message or email to the administrator. In this way, administrator 12 may review the one or more metrics (e.g., displayed in a user interface) to help to identify root cause faults (RCFs) of hardware components and/or software components of network 2.

In accordance with the techniques of the disclosure, controller device 10, which may form part of an NMS for enterprise network 2, provides user interface 36 that provides improved visibility of a network topology of network elements within a network system, such enterprise network 2, thereby allowing a user to maintain a complete view of the network elements across the network topology, including for networks that have arbitrarily large scale or complexity. While the example of FIG. 1 depicts enterprise network 2, in other instances, the computer network may be a network within a datacenter, a service provider network, or even a public network such as the Internet.

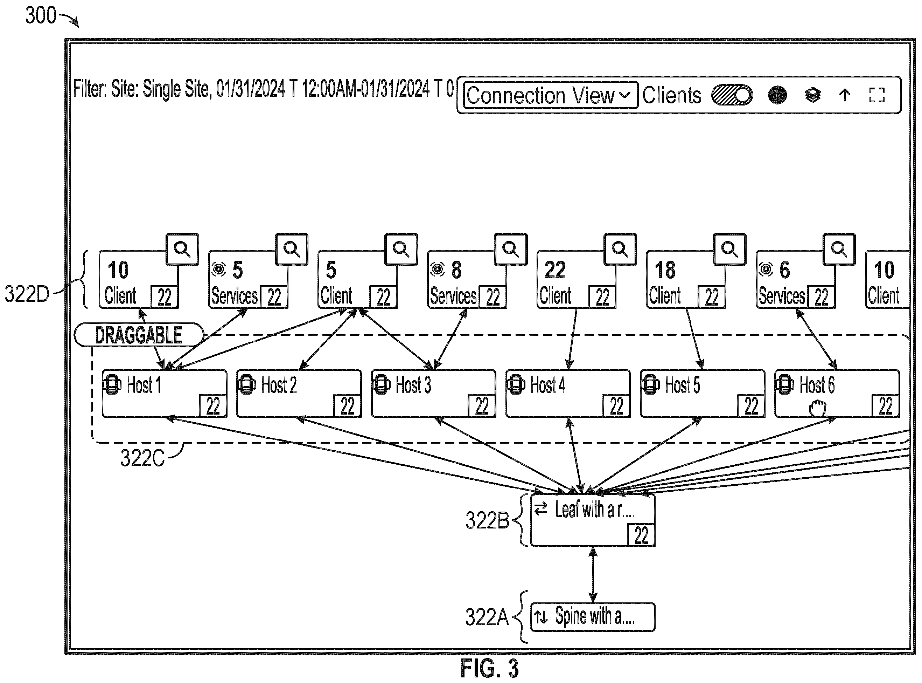

In some examples, controller device 10 outputs user interface 36 for display at a display device, such as one of administrators 12. As described in more detail with respect to FIGS. 3, 4, and 5A-5C, user interface 36 comprises an arrangement of icons, each icon corresponding to a network element 14 of network 2. In addition, the icons are arranged into multiple layers, each layer corresponding to a topological layer of network elements 14 within the network system 2. For example, the network topology may include one or more topological layers including: (1) a spine layer that includes one or more spine network devices of the network elements 14; (2) a leaf layer that includes one or more leaf network devices of the network elements 14; (3) a host layer that includes one or more host computing devices of the network elements 14; or (4) a virtualization layer that includes one or more client applications or services of the network elements 14. Further, the arrangement includes one or more lines that depict logical connections between network elements 14 of the network system 2.

Other types of topological layers may be present. For example, there may be a topological layer with network elements that are respective virtual machine machines, a deployable group of one or more containers (e.g., a Kubernetes Pod), another type of virtual compute instance, a computer process. There may be a GPU topological layer of Graphics Processing Units (GPUs), ASICs, co-processors, FPGAs, or other type of computing logic. There may be additional layers for additional network layers, transit gateways, virtual private cloud elements, and so forth. In addition, there may be more or fewer layers than are displayed with user interface 36.

As described herein, each "icon" is a graphical representation that visually represents a corresponding network element (or element(s)) 14. Each icon may be in the form of an image, text, numeral, glyph, or any type of UI element that visually represents or indicates the corresponding network element.

Based at least in part on an indication of user input, such as administrators 12, controller device 10 modifies the arrangement by performing a geometric translation of one or more first layers of first icons, without performing a geometric translation of one or more second layers of icons. For example, the user may use an input device to "drag" the first layer to reposition the icons of the first layer horizontally within the arrangement, while maintaining the position of the icons of others layers within the arrangement. Further, controller device 10 adjusts the one or more lines to maintain the depiction of the logical connections between network elements 14 of network system 2. Controller device 10 outputs, for display to the user, user interface 36 comprising the modified arrangement.

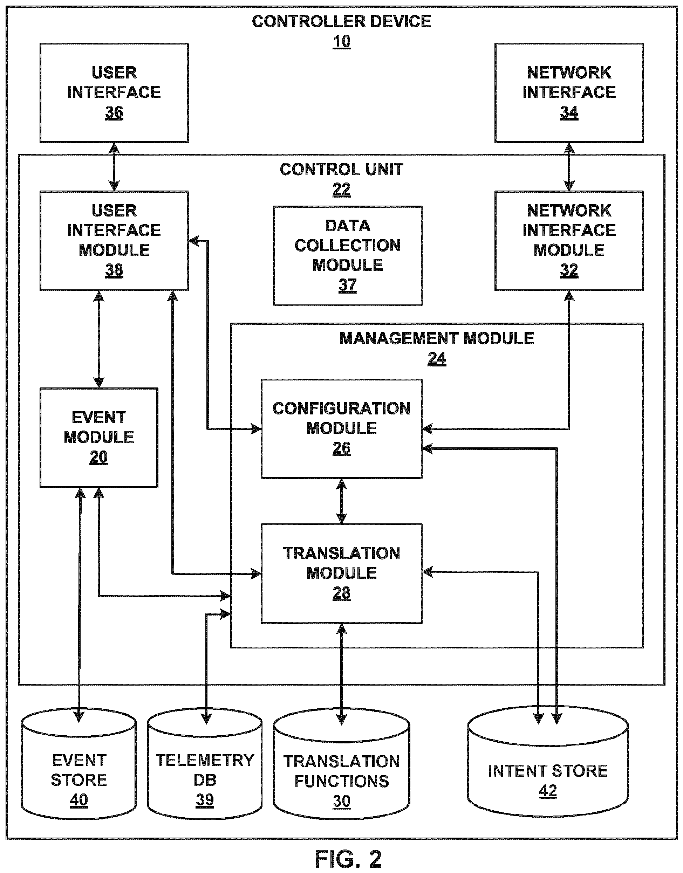

FIG. 2 is a block diagram illustrating an example set of components for controller device 10 of FIG. 1. In this example, controller device 10 includes control unit 22, network interface 34, and user interface 36. Network interface 34 represents an example interface that can communicatively couple controller device 10 to an external device (e.g., one of elements 14 of FIG. 1). Network interface 34 may represent a wireless and/or wired interface (e.g., an Ethernet interface or a wireless radio configured to communicate according to a wireless standard, such as one or more of the IEEE 802.11 wireless networking protocols (such as 802.11 a/b/g/n or other such wireless protocols)). Controller device 10 may include multiple network interfaces in various examples, although only one network interface is illustrated for purposes of example.

Control unit 22 represents any combination of hardware, software, and/or firmware for implementing the functionality attributed to control unit 22 and its constituent modules and elements. When control unit 22 includes software or firmware, control unit 22 further includes any necessary hardware for storing and executing the software or firmware, such as one or more processors or processing units. In general, a processing unit may include one or more microprocessors, digital signal processors (DSPs), application specific integrated circuits (ASICs), field programmable gate arrays (FPGAs), or any other equivalent integrated or discrete logic circuitry, as well as any combinations of such components. Furthermore, a processing unit is generally implemented using fixed and/or programmable logic circuitry.

User interface 36 represents one or more interfaces by which a user, such as administrator 12 (FIG. 1) interacts with controller device 10 (e.g., to provide input and receive output). For example, user interface 36 may represent one or more of a monitor, keyboard, mouse, touchscreen, touchpad, trackpad, speakers, camera, microphone, or the like. Furthermore, although in this example controller device 10 includes a user interface, it should be understood that administrator 12 need not directly interact with controller device 10, but instead may access controller device 10 remotely (e.g., via network interface 34).

In the example of FIG. 2, control unit 22 includes user interface module 38, network interface module 32, management module 24, and event module 20. Control unit 22 executes user interface module 38 to receive input from and/or provide output to user interface 36. For example, user interface module 38 may output event information from an event store 40 to user interface 36, such as for presentation to a user.

User interface module 38 may receive input indicating a user request for event information, configuration information, or both via user interface 36. For example, user interface module 38 may receive a request for particular event information in event store 40 (e.g., a query). In some examples, controller device 10 or another device may be configured to query metrics from multiple databases. Examples of query for multiple databases may be found, for example, in "QUERY MECHANISM FOR A NETWORK MANAGEMENT SYSTEM" in U.S. Patent Application No. 18/185,326, filed March 16, 2023, the entire contents of which is hereby incorporated by reference. The request may include one or more parameters that provide criteria defining which units of event information from a larger collection of event information (e.g., an event log in event store 40) to retrieve. Event module 20 may retrieve one or more units of event information from event store 40 based on the query. Event module 20 may utilize one or more pointers in the event information to retrieve network information from telemetry database 39 (e.g., telemetry information), or intent store 42 (e.g., configuration information). User interface module 38 may generate data representing the retrieved event information and output the data for display, such as at user interface 36.

Control unit 22 also executes network interface module 32 to send and receive data (e.g., packets) via network interface 34. User interface module 38, network interface module 32, and management module 24 may again be implemented as respective hardware units, or in software or firmware, or a combination thereof.

Control unit 22 executes management module 24 to manage various network devices (e.g., elements 14 of FIG. 1). Management includes, for example, configuring the network devices according to instructions received from a user (e.g., administrator 12 of FIG. 1) and providing the user with the ability to submit instructions to configure the network devices. In this example, management module 24 further includes configuration module 26 and translation module 28.

Management module 24 is configured to receive an intent (e.g., a high-level configuration instruction) for a set of managed network devices from a user, such as administrator 12. In some examples, management module 24 may be referred to herein as a "fabric manager." Over time, the user may update the configuration instructions (e.g., to add new services, remove existing services, or modify existing services performed by the managed devices). The intents may be structured according to, e.g., YANG. In some examples, management module 24 also provides the user with the ability to submit translation functions that translation module 28 executes to transform intents to device-specific, low-level configuration instructions, as discussed below.

Intent store 42 may include a data structure describing network information (e.g., configuration) of managed network devices (e.g., network elements 14). For example, intent store 42 may include network information indicating device identifiers (such as MAC and/or IP addresses), device type, device vendor, devices species (e.g., router, switch, bridge, hub, etc.), or the like. Intent store 42 may store network information including current configurations (e.g., intent graph model, or in some cases, both intent graph model and low-level configuration information) for the managed devices (e.g., network elements 14). Intent store 42 may include a database that comprises a unified intent graph model. In this example, intent store 42 may store at least an intent graph model currently deployed at network elements 14 and zero or more (e.g., 5) intent graph models previously deployed at network elements 14.

Intent store 42 may store a series of intent graph models representing an entire state of network 2, including network information (e.g., device configuration information) for components, such as elements 14 of network 2, at various times. For example, intent store may store individual intent graph models representing an entire state of network 2 for each of times t₀, t₁, t₂, t₃, ... tₙ where at each time t, at least one change to the entire state of network 2 has occurred. In this manner, intent store 42 may store data representing the entire state of network 2, including network information, over a period of time. In some examples, management module 24 provides intent graph models to intent store 42 for storage.

Intent store 42 may store an intent graph model as one or more snapshots, difference information or both. As used herein, a snapshot may include a complete state (e.g., both information indicating changes from a reference or previous intent graph model and information that has not changed from the reference or previous intent graph model) of each category of information used for reproducing an intent graph model. In some examples, a snapshot represents data for an initial intent graph model applied to network 2, however, in other examples, a snapshot may represent data for an intent graph model applied to network 2 after the initial intent graph.

Difference information may include a "diff" or differences between intent graph models as a whole or between individual categories of information for an intent graph model. For example, difference information may include differences between two intent graph models as a whole. Difference information may include one or more differences or changes from an instant intent graph model to a previous intent graph model that is deployed at elements 14 immediately prior to the instant intent graph model. Controller device 10 may determine the one or more changes or differences by, for example, applying various "diff" or difference techniques, including determination of shared portions of data between the intent graph models to identify differences or changes between the intent graph models. Examples of using difference information may be found, for example, in "INTENT GRAPH MODEL GENERATION USING DIFFERENCE INFORMATION" in U.S. Patent Application No. 18/543,813, filed December 18, 2023, the entire contents of which is hereby incorporated by reference.

For example, controller device 10 may generate the difference information to identify one or more of an addition, a deletion, or a modification to a network state (e.g., an interface) from a previous intent graph model to an instant intent graph model. In this example, controller device 10 may apply the one or more changes specified in the difference information to the previous intent graph model to determine the instant intent graph model. Controller device 10 may determine the previous intent graph model using a snapshot for the previous intent graph model and/or using difference information for the previous intent graph model. Intent store 42 may store intent graph models, including snapshots and difference information that represent the intent graph models as one or more objects.

Data collection module 37, which may comprise a writer and/or a reader, may be configured to receive telemetry data. Data collection module 37 may store a state of all elements for each sample. In some examples, data collection module 37 may store a state for event driven data only in response to a change. Examples of a time series database for storing telemetry data may be found, for example, in "TIME SERIES DATA COLLECTION FOR A NETWORK MANAGEMENT SYSTEM" in U.S. Patent Application No. 17/657,504, filed March 31, 2022, the entire contents of which is hereby incorporated by reference. For example, data collection module 37 may receive telemetry data from elements 14, from a set of sensor devices associated therewith, or both. Telemetry database 39 may store telemetry data for network 2 and associate the telemetry data with a time. For example, controller device 10 may store a snapshot for a first time (T1) and may store only changes in event driven data between T1 and a third time (T3).

Management module 24 may maintain a data structure in intent store 42. The data structure may include a plurality of vertices and a plurality of edges, each vertex of the plurality of vertices representing a respective network device of a plurality of network devices (e.g., network elements 14) or a respective stateless intent of a plurality of stateless intents, and the plurality of edges defining relationships between the plurality of vertices. Management module 24 may receive an indication of a stateful intent. For example, management module 24 may receive intent unified-graph-modeled configuration data for a set of managed network devices from a user, such as administrator 12.

Translation module 28, which may also be referred to herein as a "device manager," may determine which devices are managed using intent store 42. Translation module 28 determines which of translation functions 30 to execute on the high-level configuration instructions based on the information of intent store 42 (e.g., which of the devices are to receive the low-level configuration instructions). Translation module 28 then executes each of the determined translation functions of translation functions 30, providing the high-level configuration instructions to the translation functions as input and receiving low-level configuration instructions. Translation module 28 may then provide the low-level configuration instructions to configuration module 26.

After receiving the low-level configuration instructions from translation module 28, configuration module 26 sends the low-level configuration instructions to respective managed network devices for which configuration is to be updated via network interface module 32. Network interface module 32 passes the low-level configuration instructions to network interface 34. Network interface 34 forwards the low-level configuration instructions to the respective network devices.

As used herein, network information may include high-level configuration instructions, low-level configuration instructions, or both. Intent store 42 may store the network information, such as described above. For example, intent store 42 may store a snapshot of an intent graph model or difference information including network information for one or more components, such as elements 14, of network 2.

Control unit 22 executes event module 20 to store and retrieve event information and network information. In some examples, event module 20 stores and retrieves event information from event store 40 and retrieves network information from intent store 42 (e.g., configuration information) or telemetry database 39 (e.g., telemetry information). Event module 20 may store event information in one or more event logs in event store 40.

Event module 20 may receive events from various sources. For example, event module 20 may receive device metric or other events from network devices 14, such as via network interface 34 or data collection module 37. Event module 20 may receive configuration change events (e.g., commit change or deployment change events) or other events from management module 24, such as in response to a change in intent received from a user by management module 24.

As described above, an event may be associated with network information. Event module 20 may determine whether network information is included in or associated with an event. If an event includes network information, event module 20 may store event information in event store 40 including a pointer to the network information in intent store 42 or telemetry database 39 without including the network information in the event information. For example, event module 20 may store event information with a pointer to intent store 42 when an event's network information comprises configuration information (e.g., configuration strings or configuration instructions), and store event information with a pointer to telemetry database 39 when an event's network information comprises device metrics (e.g., telemetry). If an event does not include network information, event module 20 may store event information in event store 40 in its entirety.

Although user interface 36 is described for purposes of example of allowing administrator 12 (FIG. 1) to interact with controller device 10, other interfaces may be used in other examples. For example, controller device 10 may include a representational state transfer (REST) client (not shown) that may act as an interface to another device, by which administrator 12 may configure controller device 10. Likewise, administrator 12 may configure elements 14 by interacting with controller device 10 through the REST client.

In accordance with the techniques of the disclosure, user interface module 38 of controller device 10 provides user interface 36 that provides improved visibility of a network topology of network elements within a network system, such enterprise network 2 of FIG. 1, thereby allowing a user to maintain a complete view of the network elements across the network topology, including for networks that have arbitrarily large scale or complexity.

In some examples, user interface module 38 outputs user interface 36 for display at a display device. As described in more detail with respect to FIGS. 3, 4, and 5A-5C, user interface 36 comprises an arrangement of icons, each icon corresponding to a network element 14 of network 2. In addition, the icons are arranged into multiple layers, each layer corresponding to a topological layer of network elements 14 within the network system 2. For example, the network topology may include one or more topological layers including: (1) a spine layer that includes one or more spine network devices of the network elements 14; (2) a leaf layer that includes one or more leaf network devices of the network elements 14; (3) a host layer that includes one or more host computing devices of the network elements 14; or (4) a virtualization layer that includes one or more client applications or services of the network elements 14. Further, the arrangement includes one or more lines that depict logical connections between network elements 14 of the network system 2.

Based at least in part on an indication of user input, such as administrators 12, user interface module 38 modifies the arrangement by performing a geometric translation of one or more first layers of first icons, without performing a geometric translation of one or more second layers of icons. Thus, user interface module 38 may enable a user to perform an independent geometric translation of each layer of icons without translating other layers of icons. For example, the user may use an input device to "drag" the first layer to reposition the icons of the first layer horizontally within the arrangement, while maintaining the position of the icons of others layers within the arrangement. Further, user interface module 38 adjusts the one or more lines to maintain the depiction of the logical connections between network elements 14 of network system 2. User interface module 38 outputs, for display to the user, user interface 36 comprising the modified arrangement.

In some examples, user interface module 38 presents user interface 36 for display to a local user via one or more output devices (not depicted in FIG. 2). In some examples, user interface module 38 generates a web page comprising user interface 36 that may be accessed remotely over a computer network by a user.

Although the techniques of the present disclosure are described in this example as performed by control device 10, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than control device 10, or may be distributed throughout computing devices of network 2, and may or may not form a part of network 2 itself.

FIG. 3 is an illustration depicting an example user interface 300 in accordance with the techniques of the disclosure. In some examples, user interface 300 is an example of user interface 36 of FIG. 1 or user interface 36 of FIG. 2.

Traditionally, conventional user interfaces that provide network topology visualizations rely on hierarchical layouts with nested layers. For example, such a conventional user interface may display elements belonging to a first hierarchical layer of the network topology, and in response to a user selecting an element, the user interface displays a second hierarchical layer of the network topology, including only those elements which are "children" of the selected element (e.g., that are "nested" under the selected element). While this approach offers a clear structure, its legibility suffers with complex networks. Using such a conventional system, a user traditionally may zoom in and out of a representation of the entire network topology, or the user may click to see individual layers, losing the view of the network hierarchy.

To address this deficiency in conventional user interfaces, the techniques disclosed herein enable a user interface to perform "single layer scrolling," as set forth within. This approach shows each hierarchical layer within the network topology as a horizontally-scrollable section. This allows a user to maintain a complete view of the entire network, network topology, and corresponding hierarchies, while focusing on specific sections via horizontal scrolling.

For example, when a whole fabric is shown to the user, there may be an unlimited number of grouped and ungrouped nodes. In accordance with the techniques of the disclosure, to keep the network topology legible and accessible, the nodes may all be shown to a user, but some may spread offscreen (e.g., outside of a viewing pane or viewable portion of the user interface 36). If this happens, the user may use a user input device, such as a mouse, joystick, or trackpad, to "click-and-drag" a single layer at a time to view the nodes, without losing context of the upper or lower layers of the network topology. User interface 36, as described herein, shows each layer within the network topology as a horizontally scrollable section, which may be scrolled independently to the other layers. This allows users to maintain a complete view of the entire network while focusing on specific sections through horizontal scrolling. The techniques of the disclosure offers several advantages over conventional user interface designs:

Fixed-context vs. Free-scrolling. Conventional user interfaces permit a user only to move or scale the entire topology or structure when scrolling, which can disorient the user. The techniques disclosed herein overcome this limitation in conventional techniques by fixing the parent node within the viewing screen, thereby maintaining context and improving usability.

Improved Contextual Awareness: Single Layer Scrolling, as described herein, allows a user to maintain context while navigating the network. While zooming into a network topology using a conventional user interface, it may be easy for the user to lose sight of the bigger picture as the view of the entire network topology is lost. Single Layer Scrolling, as described herein, enables a user to keep track of their location within the network, as well as allowing a user to better understand how different parts of the network relate to each other. This can be crucial for troubleshooting issues or understanding the network traffic flow. Thus, the techniques of the disclosure may enable a user to see the entire network layout at a glance, thereby preserving his or her understanding of the overall flow and connections between different layers of the network topology.

Enhanced Scalability: Single Layer Scrolling, as described herein, may effectively accommodate complex networks with numerous devices by allowing horizontal expansion, without sacrificing context.

Flexibility in navigation: the proposed techniques offer a flexible navigation experience, allowing users to explore different parts of the topology while keeping the core context intact. Conventional user interfaces do not offer this level of flexibility and ease of use.

In accordance with the techniques of the disclosure, user interface 300 includes a plurality of layers 322A-322D (hereinafter, "layers 322"), each layer representing a topological layer of network elements 14 within a network system. In some examples, the network system is a data center. In some examples, the network system is another network system, such as an enterprise network, a service provider network, or a public network, such as the Internet.

For example, first layer 322A represents a spine layer of a network system, and includes one or more first icons corresponding to one or more spine network devices of the network system. Second layer 322B represents a leaf layer of the network system, and includes one or more second icons corresponding to one or more leaf network devices of the network system. Third layer 322C represents a host computing layer of the network system, and includes third icons corresponding to host computing devices of the network system. Fourth layer 322D represents a virtualization layer of the network system, and includes fourth icons corresponding to client applications or services of the network system. Further, the user interface 36 includes one or more lines that depict logical connections between network elements 14 of the network system 2.

Based at least in part on an indication of user input, user interface module 38 of FIG. 2 modifies the arrangement by performing a geometric translation of the third icons arranged into third layer 322C without performing a geometric translation of icons arranged into other layers 322A, 322B, and 322D. For example, the user may use an input device to "drag" third layer 322C to reposition the third icons of third layer 322C horizontally within the arrangement, while maintaining the position of the icons of others layers 322A, 322B, and 322D within the arrangement. In other examples, the user may use an input device to select a "scroll bar" user interface element to cause the third layer 322C to scroll horizontally within the arrangement. In other examples, the user may provide directional key input, such as a "left" or "right" arrow key, which may cause the third layer 322C to scroll horizontally within the arrangement. Further, user interface module 38 adjusts the one or more lines to maintain the depiction of the logical connections between network elements 14 of network system 2. User interface module 38 outputs, for display to the user, user interface 36 comprising the modified arrangement.

In the example of FIG. 3, the geometric translation is a horizontal geometric translation, and layers 322 are arranged into horizontal layers (or "rows"). However, in other implementations of the techniques of the disclosure, the layers representing the network topology may be arranged into vertical layers (or "columns"), and the user interface may permit a user to perform a vertical geometric translation of an individual "column" representing a particular hierarchical layer of the network topology, for example, without performing a vertical geometric translation of the icons arranged into the other columns representing other hierarchical layers of the network topology.

Besides horizontal and vertical layers, controller device 10 may use any other type of arrangement and translations useful for a hierarchical depiction of a network topology and interaction with the icons representing elements of the network topology. For example, controller device 10 may generate concentric circles, ovals or other ellipses representations to depict the layers, or trees, and the user may perform scrolling by rotating (rather than translating as with horizontal/vertical layers) the ellipses around one or more focal points, for instance. Other shapes may also be used for layers, such as any-sided polygons, with interactions described herein taking the form of rotating, scaling, and/or translating as appropriate.

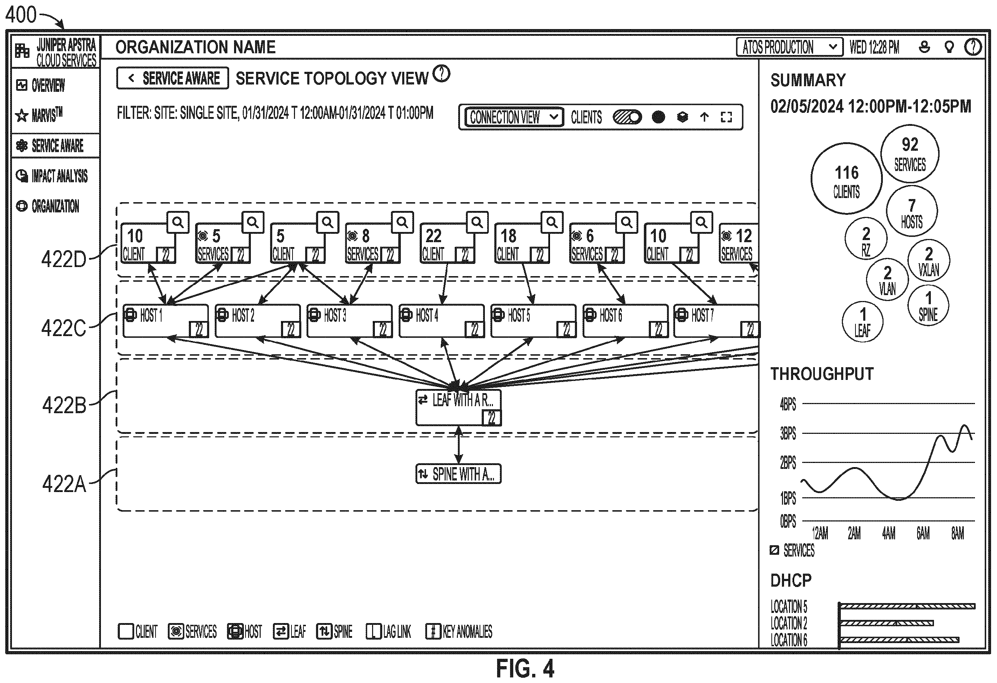

FIG. 4 is an illustration depicting an example user interface 400 in accordance with the techniques of the disclosure. In some examples, user interface 400 is an example of user interface 36 of FIG. 1 or user interface 36 of FIG. 2.

In accordance with the techniques of the disclosure, user interface 400 includes a plurality of layers 422A-422D (hereinafter, "layers 422"), each layer representing a topological layer of network elements 14 within a network system. In some examples, the network system is a data center. In some examples, the network system is another network system, such as an enterprise network, a service provider network, or a public network, such as the Internet.

For example, first layer 422 is a scrollable spine layer. First layer 422A represents a spine layer of a network system, and includes one or more first icons corresponding to one or more spine network devices of the network system. While a typical deployment may have only one or a few spine network devices, this layer may provide scrollable functionality if there are more spine network devices than fit on the screen.

Second layer 422B is a scrollable leaf layer. Second layer 422B represents a leaf layer of the network system, and includes one or more second icons corresponding to one or more leaf network devices of the network system. While a typical deployment may have only a few leaf network devices, this layer may provide scrollable functionality if there are more leaf network devices than fit on the screen.

Third layer 422C is a scrollable Host layer. Third layer 422C represents a host computing layer of the network system, and includes third icons corresponding to host computing devices of the network system.

Fourth layer 422D is a scrollable clients/services (also referred to herein as a "virtualization layer"). Fourth layer 422D represents a virtualization layer of the network system, and includes fourth icons corresponding to client applications or services of the network system. In some examples, fourth layer 422D may be controlled via directional inputs received from a user input device, such as the "left" and "right" arrow keys of a keyboard.

Further, user interface 400 includes one or more lines. Each of the one or more lines depict or represent logical connections between network elements 14 of the network system 2 across the various layers 422.

In some examples, such as where the network system includes large numbers of network elements, each icon may correspond to a plurality of network elements. In this example, the icon may depict a count of the network elements to which the icon corresponds.

In some examples, each icon may depict a count of alert messages for the corresponding network element of the network elements. In some examples, a color of the icon or a portion of the icon may correspond to a severity of the alert (or the severity of a most severe alert where multiple alerts are shown).

In another implementation of the techniques of the disclosure, user interface 400 may include a Mini-map overlay (not depicted in the example of FIG. 4). In this implementation, user interface 400 incorporates a mini-map in a corner of a screen that shows an entire network topology, with a highlighted area indicating the current view depicted in the main view. A user may navigate using the mini-map, while the main view remains centered on a parent node.

In yet another implementation of the techniques of the disclosure, user interface 400 may include a "Highlight and Focus" technique (not depicted in the example of FIG. 4). For example, user interface 400 may use highlighting and focus techniques, wherein the parent node and its direct connections are highlighted or emphasized, and the rest of the network topology is dimmed, greyed-out, etc. As a user scrolls, the highlighted area remains centered.

While the techniques of the disclosure are described with respect to the visualization of network topology, the techniques described herein may be applied to other user interfaces in other applications as well. For example, the techniques of the disclosure may enhance mind-mapping tools. For example, in mind-mapping applications, a user interface using the techniques described herein may fix a central idea of a main topic, while allowing a user to scroll branches independently, which may help a user navigate large and complex mind maps.

As another example, the techniques of the disclosure may enhance data visualization dashboards. For example, in dashboards displaying interconnected data, a user interface using the techniques described herein may keep a main datapoint or Key Performance Index (KPI) fixed, while allowing a user to scroll related metrics independently, which may help a user maintain context and better understand the data relationships.

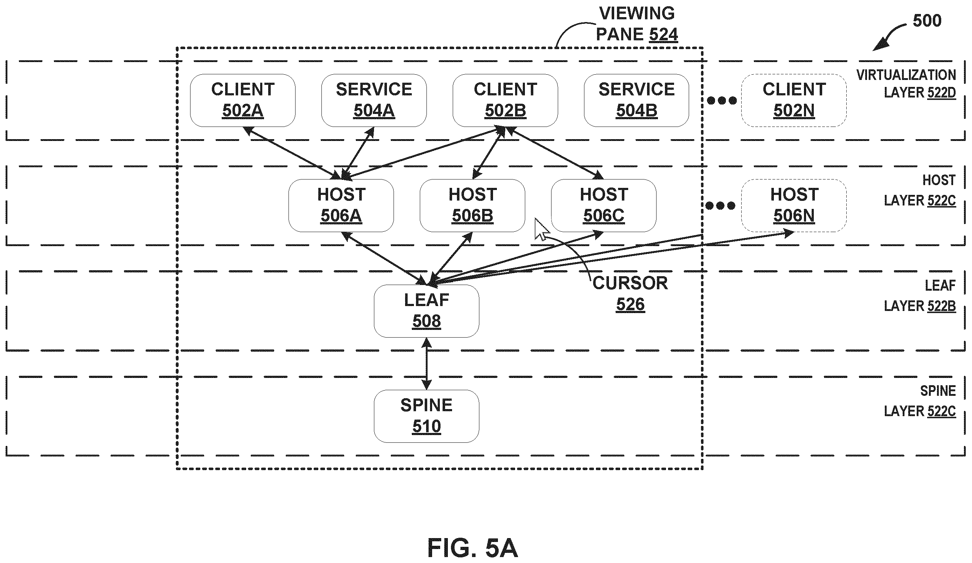

FIGS. 5A-5C are block diagrams illustrating an example user interface 500 in accordance with the techniques of the disclosure. Mor specifically, FIGS. 5A-5C illustrate a transitional sequence performed by user interface 500 in accordance with the techniques of the disclosure. In some examples, user interface 500 is an example of user interface 36 of FIG. 1 or user interface 36 of FIG. 2.

As depicted in the example of FIG. 5A, user interface 500 includes a plurality of layers 522A-522D (hereinafter, "layers 522"), each layer 522 representing a topological layer of network elements 14 within a network system. In some examples, the network system is a data center.

For example, first layer 522A represents a spine layer of a network system, and includes first icon 510 corresponding to one or more spine network devices of the network system. Second layer 522B represents a leaf layer of the network system, and includes second icon 508 corresponding to one or more leaf network devices of the network system. Third layer 522C represents a host computing layer of the network system, and includes third icons 506A-506N (collectively, "icons 506") corresponding to host computing devices of the network system. Fourth layer 522D represents a virtualization layer of the network system, and includes fourth icons 502A-502N and 504A-504N (collectively, "icons 502, 504"). Icons 502 correspond to client applications of the network system, and icons 504 correspond to services of the network system. Furthermore, user interface 500 includes one or more lines that depict logical connections between network elements 14 of the network system 2.

User interface 500 includes viewing pane 524 (also referred to herein as a "viewable portion" of user interface 500). Viewing pane 524 represents the portion of user interface 500 that is viewable to the user, e.g., the portion that is actually rendered and presented to the user.

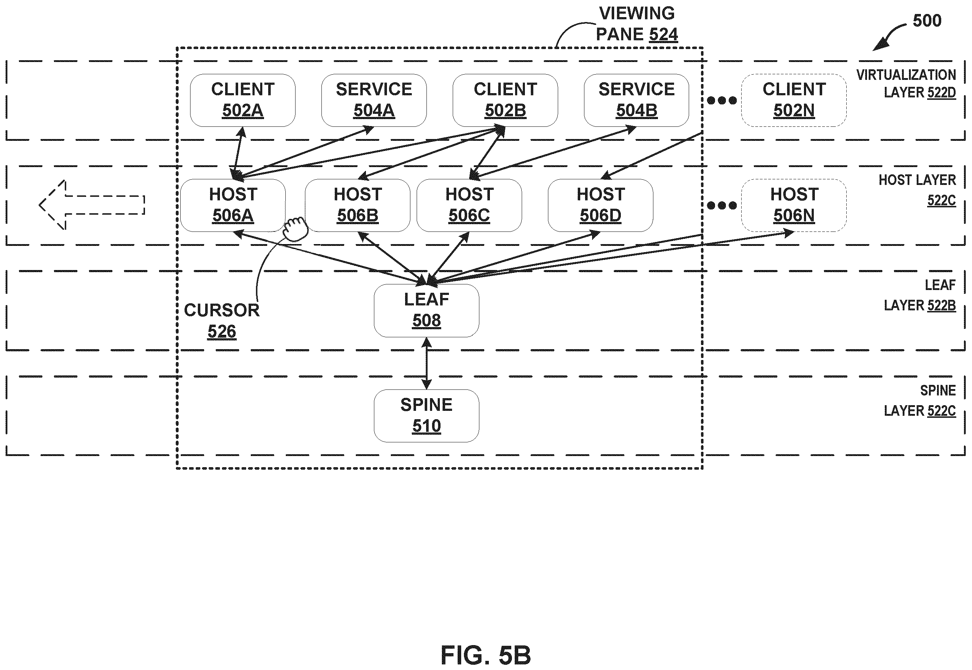

As depicted in FIG. 5B, based at least in part on an indication of user input, user interface module 38 of FIG. 2 modifies viewing pane 524 by performing a geometric translation of, e.g., host icons 506 arranged into third layer 522C, without performing a geometric translation of icons 502, 504, 508, 510 arranged into layers 522A, 522B, and 522D.

For example, the user may use an input device, such as a mouse, joystick, or trackpad, to "click-and-drag" (represented by cursor 526 of FIGS. 5A-5C) third layer 522C to reposition host icons 506 of third layer 522C horizontally within user interface 500, while maintaining the position of icons 502, 504, 508, 510 of others layers 522A, 522B, and 522D within user interface 500. In other examples, the user may use an input device to select a "scroll bar" user interface element (or other scroll icon provided by user interface 500) to cause the third layer 522C to scroll horizontally within the user interface 500. In other examples, the user may provide directional key input, such as a "left" or "right" arrow key of a keyboard, which may cause the third layer 522C to scroll horizontally within the user interface 500. Further, user interface module 38 adjusts the one or more lines to maintain the connections between icons 506 with icons 502, 504, 508, 510, so as to maintain the depiction of the logical connections between, e.g., the host computing devices with the other network devices, client applications, and services of the network system.

As depicted in the example of FIGS. 5A-5C, there exist more host computing devices (and corresponding host icons 506), than may be depicted within viewing pane 524. Therefore, as depicted in FIG. 5A, viewing pane 524 depicts only a subset of host icons 506A-506C corresponding to only a subset of the host computing devices. As user interface module 38 performs the horizontal geometric translation of host layer 522 (in the example of FIGS. 5A-5C, to the left), user interface module 38 may remove host icon 506A from the viewing pane 524 and add host icons 506D, 506E as the layer 522 translates to the left.

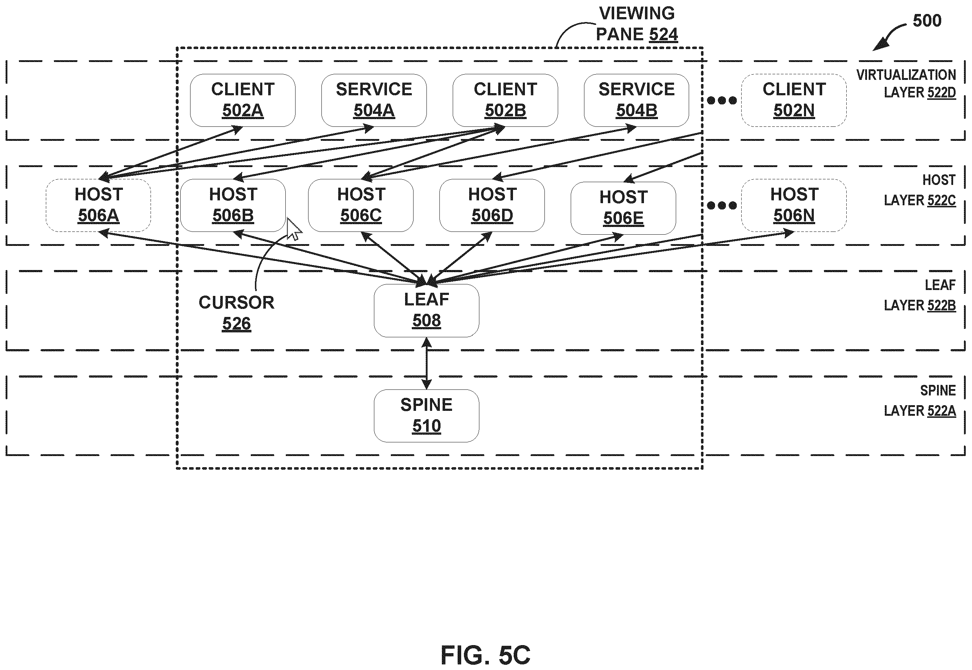

The modified user interface 500, including the resultant modification to viewing pane 524, is depicted in FIG. 5C. As illustrated in FIG. 5C, the resultant viewing pane 524 includes a different subset of host icons (506B-506E) within host layer 522. In addition, the position of icons 502, 504, 508, 510 of others layers 522A, 522B, and 522D within viewing pane 524 is maintained throughout the transition of FIGS. 5A-5C. User interface module 38 outputs, for display to the user, user interface 36 comprising the modified arrangement.

The foregoing example depicts a horizontal geometric translation of host layer 522 to the left, and is provided as an non-limiting example for illustrative purposes only. The techniques of the disclosure may also be performed with respect to any of layers 522A, 522B, 522C, or 522D. In addition, the layers may be independently moved to the left or right, or in any other direction that assist in the understanding of the user of the network topology. For example, in other implementations, layers 522 may be arranged vertically in columns (instead of horizontally in rows), and may enable a user to perform vertical geometric translation of independent layers (e.g., up or down).

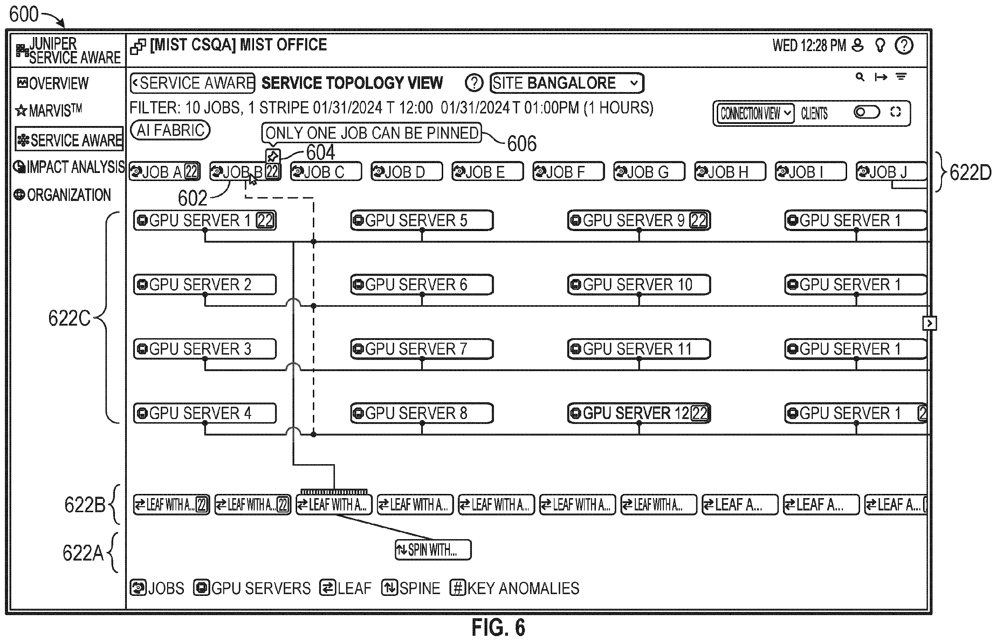

FIG. 6 is a block diagram illustrating example user interface 600 in accordance with the techniques of the disclosure. In some examples, user interface 600 is an example of user interface 36 of FIG. 1 or user interface 36 of FIG. 2.

In addition or in the alternative to the techniques and designs for displaying topology described above, in FIG. 6, user interface 600 includes a "pin" and "unpin" concept to allow a user to view connections between layers 622A-622D (hereinafter, "layers 622") while still allowing the user to view other flows. As a user begins to diagnose issues with services and AI jobs (or other types of jobs), the user may pin one key service (or "job") within layer 622D to a fixed position in user interface 600, enabling the user to discover correlations to and connections with other elements of the topology. Other layers of elements (e.g., layers 622A-622C) may still be scrolled to enable the user to receive a full view of the topology, while still keeping the "pinned" item in view. As described elsewhere in this disclosure, other arrangements for the layers and other types of geometric translations may be used with user interface 600.

As depicted in FIG. 6, "job" layer 622D includes a "pin" and "unpin" interaction. In this example, a user hovering a cursor over a job reveals the pin icon and tooltip, and state of the job (602).

In some examples, a user may pin a single job at a time via pin icon 604. For example, clicking pin icon 604 pins a job. Once a job is pinned, user interface 600 may replace pin icon 604 with a visual indicator of an "unpin" feature, such as an "unpin" icon (not depicted in FIG. 6). Clicking the unpin job icon releases the pin from the job. In some examples, however, a user may pin multiple jobs.

Pinning a job fixes job layer 622D, preventing scrolling. Unpinning the current job is required to pin another. In some examples, attempting to pin a second job while a first job is pinned may display a tooltip on top of the pin icon (606). The tooltip 606 explains the single-pin limitation, e.g. "Only one job can be pinned." Other layers, such as Graphics Processing Unit (GPU) server layer 622C, leaf layer 622B, and spine layer 622A, etc., remain scrollable even while a job is pinned. Typically, the default state of user interface 600 is that no jobs are initially pinned. In some examples, the "pin" interaction is only permitted for jobs layer 622D. Each of GPU server elements may represent one or more GPUs.

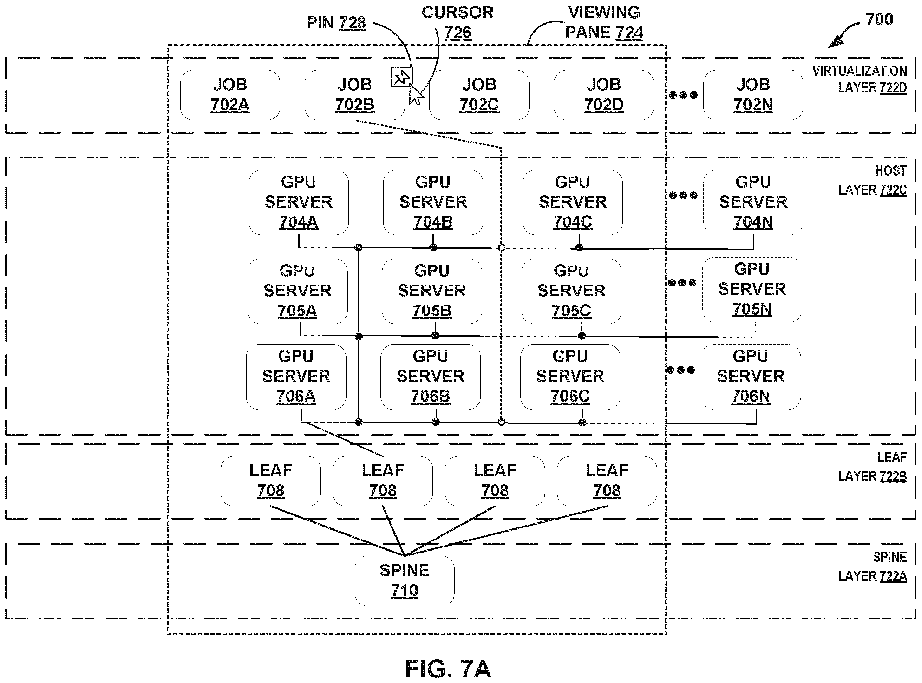

FIGS. 7A-7C are block diagrams illustrating an example user interface 700 in accordance with the techniques of the disclosure. More specifically, FIGS. 7A-7C illustrate a transitional sequence performed by user interface 700 in accordance with the techniques of the disclosure. In some examples, user interface 700 is an example of user interface 36 of FIG. 1 or user interface 36 of FIG. 2.

As depicted in the example of FIG. 7A, user interface 700 includes a plurality of layers 722A-722D (hereinafter, "layers 722"), each layer 722 representing a topological layer of network elements 14 within a network system. In some examples, the network system is a data center.

For example, first layer 722A represents a spine layer of a network system, and includes first icon 710 corresponding to one or more spine network devices of the network system. Second layer 722B represents a leaf layer of the network system, and includes second icons 708A-708D (collectively, "icons 708") corresponding to one or more leaf network devices of the network system. Third layer 722C represents a host computing layer of the network system, and includes third icons 704A-704N, 705A-705N, 706A-706N (collectively, "icons 704, 405, 706") corresponding to host computing devices of the network system. In the example of FIGS. 7A-7C, the host computing devices are GPU servers. Fourth layer 722D represents a virtualization layer of the network system, and includes fourth icons 702A-702N (collectively, "icons 502, 504"). Icons 502 correspond to "jobs," which may be services, applications, or workloads of the network system executed by GPU servers 704, 705, 706. Furthermore, user interface 700 includes one or more lines that depict logical connections between network elements 14 of the network system 2.

User interface 700 includes viewing pane 724 (also referred to herein as a "viewable portion" of user interface 700). Viewing pane 724 represents the portion of user interface 700 that is viewable to the user, e.g., the portion that is actually rendered and presented to the user.

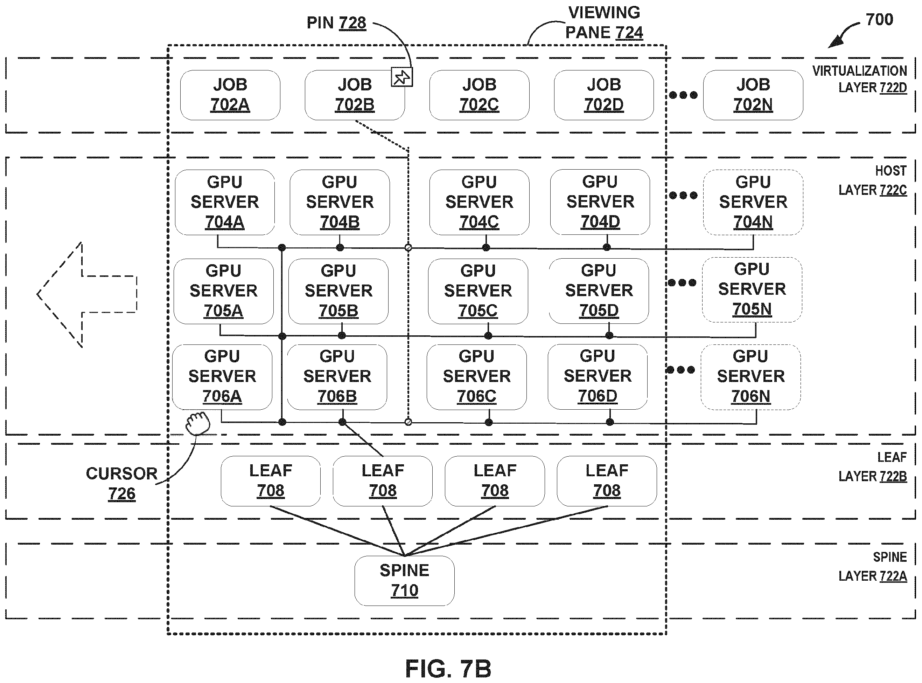

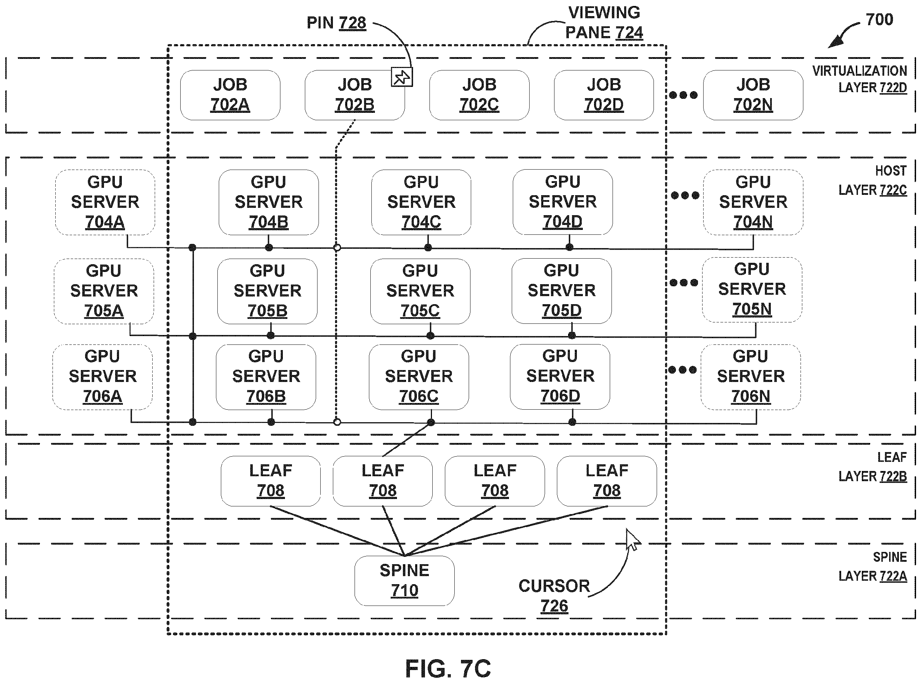

As depicted in the example of FIG. 7A, a user has positioned cursor 726 above pin icon 728 of job 702B. User interface 700 may receive a selection of pin icon 728 from the user via cursor 726, such as via a click or double-click of a mouse, or via another user input device. Based on the selection of pin icon 728, user interface 700 "pins" (also referred to as "freezing," "anchoring," etc.) job 702B, which pins a position of job 702B (as well as the other icons 702 of layer 722D) within viewing pane 724. Once pinned, and as described below with respect to FIGS. 7B and 7C, the position of icons 702 of layer 722D) within viewing pane 724 remains fixed, while still enabling a user to reposition icons of layers 722A-722C.

As depicted in FIG. 7B, based at least in part on an indication of user input, user interface module 38 of FIG. 2 modifies viewing pane 724 by performing a geometric translation of, e.g., icons 704, 705, 706 arranged into third layer 722C, without performing a geometric translation of icons 702 arranged into layer 722A.

It should be noted that in the example of FIGS. 7A-7C, icons 708, 710 of layers 722B, 722A, respectively, are not translated. This may be because the entirety of icons 708, 710 are displayable within viewing pane 724. However, in examples where more icons 708, 710 exist than can be displayed within viewing pane 724, a user may translate each corresponding layer 722B, 722A. In some examples, while job 702B is pinned, each layer 722A, 722B, and 722C are scrollable independent from one another, while layer 722D is fixed. In some examples, while job 702B is pinned, each layer 722A, 722B, and 722C are scrollable as a whole, while layer 722D remains fixed.

For example, the user may use an input device, such as a mouse, joystick, trackpad, touchscreen, presence-sensitive screen, tablet computing device, mobile computing device, or extended-reality device, to "click-and-drag" (represented by cursor 726 of FIGS. 7A-7C) third layer 722C to reposition icons 704, 705, 706 of third layer 722C horizontally within user interface 700, while maintaining the position of icons 702, 708, 710 of others layers 722A, 722B, and 722D within user interface 700. In some examples, the input interaction can be one or more fingers or a hand of a user applied to a touchscreen or presence-sensitive screen, wherein the user may use various movements or gestures, such as pinching, spreading, swiping, or tapping, to adjust the position the icons of a layer 722. In other examples, the user may use an input device to select a "scroll bar" user interface element (or other scroll icon provided by user interface 700) to cause the third layer 722C to scroll horizontally within the user interface 700. In other examples, the user may provide directional key input, such as a "left" or "right" arrow key of a keyboard, which may cause the third layer 722C to scroll horizontally within the user interface 700. Further, user interface module 38 adjusts the one or more lines to maintain the connections between icons 704, 705, 706 with icons 702, 708, 710, so as to maintain the depiction of the logical connections between, e.g., the GPU servers with the other network devices, client applications, and services of the network system.

As depicted in the example of FIGS. 7A-7C, there exist more GPU servers (and corresponding icons 704, 705, 706), than may be depicted within viewing pane 724. Therefore, as depicted in FIG. 7A, viewing pane 724 depicts only a subset of host icons 704A-704C, 705A-705C, 706A-706C corresponding to only a subset of the GPU servers. As user interface module 38 performs the horizontal geometric translation of host layer 722 (in the example of FIGS. 7B-7C, to the left), user interface module 38 may remove icons 704A, 705A, 706A from the viewing pane 524 and add icons 704D, 705D, 706D as the layer 722 translates to the left.

The modified user interface 700, includes the resultant modification to viewing pane 724, is depicted in FIG. 7C. As illustrated in FIG. 7C, the resultant viewing pane 724 includes a different subset of host icons (704B-704D, 705B-705D, 706B-706D) within host layer 722. In addition, the position of icons 702, 708, 710 of others layers 722A, 722B, and 722D within viewing pane 724 is maintained throughout the transition of FIGS. 7A-7C. User interface module 38 outputs, for display to the user, user interface 36 comprising the modified arrangement.

In the example of FIGS. 7A-7C, a user may translate icons of layers 722A and 722B in a similar fashion as described above with respect to the translation of the icons of layer 722C. However, because the user "pinned" job 702B, user interface 700 does not permit movement of icons 702 of layer 722 from the fixed position set by pinning job 702B, despite movement of the icons of layers 722A-722C.

The foregoing example depicts a horizontal geometric translation of host layer 722 to the left, and is provided as an non-limiting example for illustrative purposes only. The techniques of the disclosure may also be performed with respect to any of layers 722D, 722B, 722C, or 722A. In addition, the layers may be independently moved to the left or right, or in any other direction that assist in the understanding of the user of the network topology. For example, in other implementations, layers 722 may be arranged vertically in columns (instead of horizontally in rows), and may enable a user to perform vertical geometric translation of independent layers (e.g., up or down), or concentrically and may enable a user to perform geometric rotation. Other examples are described elsewhere in this document with respect to other user interfaces.

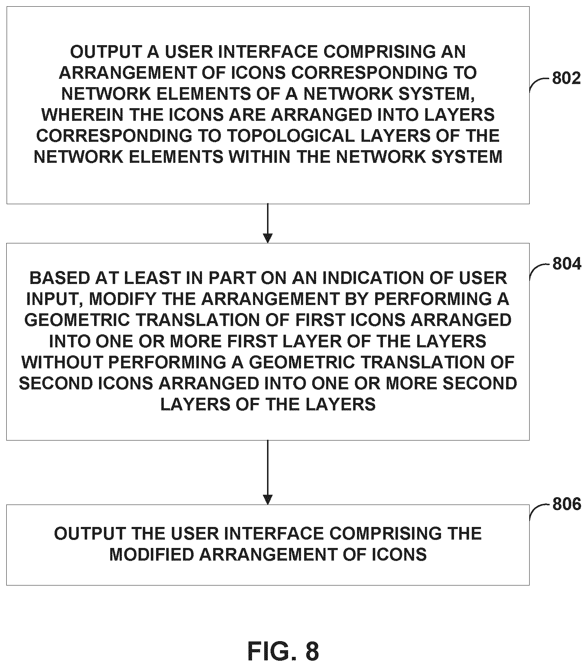

FIG. 8 is a flowchart illustrating an example operation in accordance with the techniques of the disclosure. FIG. 8 is described with respect to controller device 10 of FIG. 2 for convenience.

User interface module 38 outputs, for display at a display device, user interface 36 (802). User interface 36 an arrangement of multiple icons, each icon of which corresponds to a network element of network elements 14 of enterprise network 2 of FIG. 1. Furthermore, the icons are arranged into multiple layers, each of which corresponds to a different topological layer of the topological layers of network elements 14 within enterprise network 2. In some examples, user interface 36 further includes lines interconnecting the icons, the lines corresponding to logical connections between network elements 14 corresponding to the icons.

User interface module 38 receives an indication of user input via user interface 36. In some examples, the input comprises a selection of one or more first icons arranged into one or more first layer of the layers, or a selection of the one or more first layers themselves. In some examples, the input further comprises an indication to move the one or more first icons arranged into the one or more first layers.

Based at least in part on an indication of user input, user interface module 38 modifies the arrangement by performing a geometric translation of the first icons arranged into the one or more first layers without performing a geometric translation of second icons arranged into one or more second layers (804). In some examples, user interface module 38 adjusts one or more of the lines to maintain the interconnection between the one or more first icons arranged into the one or more first layers and the one or more icons of the second icons arranged into the one or more second layers. User interface module 38 outputs, for display to the user, user interface 36 comprising the modified arrangement (806).

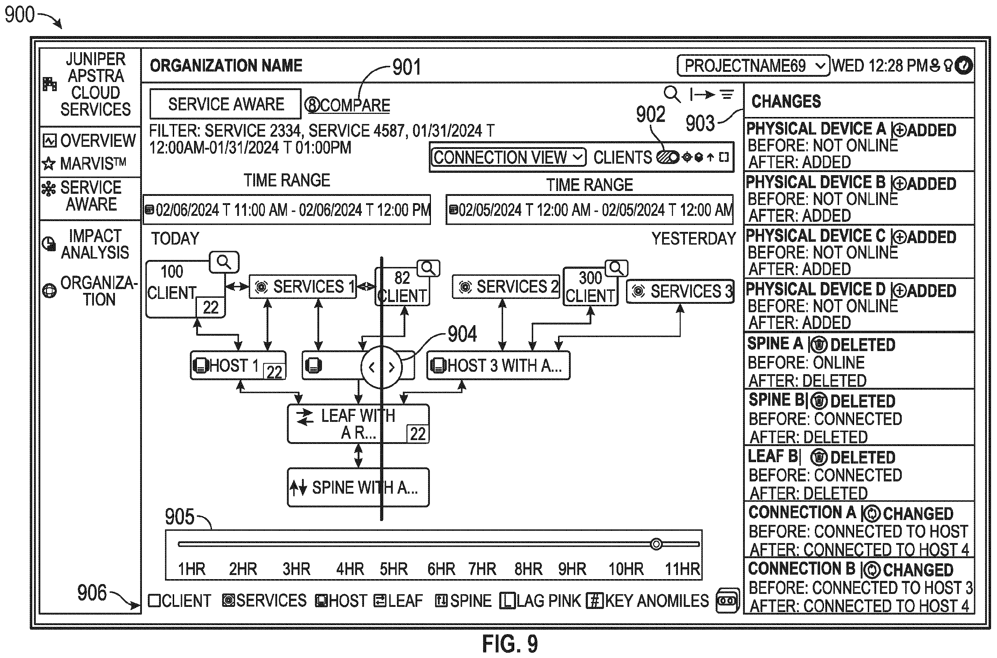

FIG. 9 is an illustration depicting example user interface 900 in accordance with the techniques of the disclosure. Network topologies are dynamic entities, constantly undergoing changes as new devices are added, removed, or reconfigured. However, traditional visualization tools often lack the ability to effectively compare network layouts across different points in time. This can make it difficult to track network evolution and identify potential issues. To address this challenge, techniques are disclosed herein for a groundbreaking feature: "Topology Compare." This innovative approach allows users to visually compare network layouts from two distinct time periods. Here's how it empowers network management:

Effortless Change Detection: The system renders both network layouts, one on top of the other, with a user-friendly slider positioned in the center. As users slide the control, the visualization seamlessly transitions between the two timeframes, highlighting changes in real-time. This eliminates the need for manual visual comparisons, saving users valuable time and cognitive effort.

Enhanced Visibility: Beyond basic additions and removals, "Topology Compare" pinpoints specific changes across various network layers. This granular visualization empowers users to identify not only the "what" but also the "where" of network modifications.

Predictive Insights: By visually analyzing network evolution, users can gain valuable insights into potential trends. This information can be used to proactively plan for future network growth and identify areas requiring closer monitoring.

This innovative approach goes beyond simply displaying two separate layouts. The interactive slider allows users to see the network morph dynamically, making it intuitively clear where changes have occurred. This empowers users to gain a deeper understanding of their network's historical and ongoing development.

The "Compare" Topology tab depicted in FIG. 9 offers users a dynamic and interactive way to analyze topology differences by allowing them to slide back and forth between two selected time ranges. Users can easily track changes within the network infrastructure by visually comparing the topology views at different points in time. Additionally, a timeline displayed at the bottom of the page, segmented at user set intervals, provides users with a detailed chronological overview of network modifications. This feature enables users to precisely pinpoint when changes occurred and correlate them with the visual representations on the topology view, enhancing their ability to understand and interpret network evolution effectively. The topology pulled from the left time range will be stacked on top of the topology from the right time range. The physical topology of the left and right time ranges must be stacked on the corresponding topology nodes exactly. This allows the user to slide the divider to show the topology difference between the left and right times. Changes impacting the topology during the time ranges selected are shown in total in the panel. Users can select a specific change to see that change in the topology.

In the example of FIG. 9, user interface 900 depicted includes the following elements:
- 901.: Compare tab.
- 902.: Clients toggle on.
- 903.: Changes Summary Panel.
- 904.: Slider to show the differences for the changes.
- 905.: Timeline interval.
- 906.: Topology legend.

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combination of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in a computer-readable medium, such as a computer-readable storage medium, containing instructions. Instructions embedded or encoded in a computer-readable medium may cause a programmable processor, or other processor, to perform the method, e.g., when the instructions are executed. Computer-readable media may include non-transitory computer-readable storage media and transient communication media. Computer readable storage media, which is tangible and non-transitory, may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer-readable storage media. The term "computer-readable storage media" refers to physical storage media, and not signals, carrier waves, or other transient media. Additionally, or alternatively, a computer-readable medium can include signals, carrier waves, or other transient media.

Further examples of feature combinations taught by the present disclosure are set out in the following numbered clauses:
1. A computing system comprising processing circuitry having access to a memory, the processing circuitry configured to:
   output, for display at a display device, a user interface comprising an arrangement of icons into layers,
   wherein each icon of the icons corresponds to a network element of network elements of a network system, and wherein each of the layers corresponds to a topological layer of topological layers of the network elements within the network system;
   based at least in part on an indication of user input, modify the arrangement of icons by performing a geometric translation of first icons of the icons arranged into one or more first layers of the layers without performing a geometric translation of second icons arranged into one or more second layers of the layers; and
   output, for display at the display device, the user interface comprising the modified arrangement of icons.
2. The computing system of clause 1,
   wherein the layers comprise horizontal layers, and
   wherein, to perform the geometric translation of the first icons, the processing circuitry is configured to perform a horizontal geometric translation of the first icons without performing a horizontal geometric translation of the second icons.
3. The computing system of clause 1 or clause 2,
   wherein the layers comprise vertical layers, and
   wherein, to perform the geometric translation of the first icons, the processing circuitry is configured to perform a vertical geometric translation of the first icons without performing a vertical geometric translation of the second icons.
4. The computing system of any preceding clause,
   wherein the user interface further includes one or more lines interconnecting one or more icons of the first icons arranged into the one or more first layers and one or more icons of the second icons arranged into the one or more second layers, the one or more lines corresponding to logical connections between corresponding network elements of the network elements within the network system, and
   wherein, to perform the geometric translation of the first icons, the processing circuitry is configured to adjust the one or more lines to maintain the interconnection between the one or more icons of the first icons and the one or more icons of the second icons.
5. The computing system of any preceding clause, wherein the topological layers of the network elements of the network system comprise:
   a spine layer that includes one or more spine network devices of the network elements;
   a leaf layer that includes one or more leaf network devices of the network elements;
   a host layer that includes one or more host computing devices of the network elements; and
   a virtualization layer that includes one or more client applications or services of the network elements.
6. The computing system of any preceding clause, wherein the layers into which the icons are arranged comprise one or more of:
   a first layer comprising one or more first icons corresponding to one or more spine network devices of a spine layer of the topological layers;
   a second layer comprising one or more second icons corresponding to one or more leaf network devices of a leaf layer of the topological layers;
   a third layer comprising one or more third icons corresponding to one or more host computing devices of a host layer of the topological layers; and
   a fourth layer comprising one or more fourth icons corresponding to one or more client applications or
   services of a virtualization layer of the topological layers.
7. The computing system of any preceding clause,
   wherein the user interface comprises a portion that is viewable to the user, and wherein the first icons comprise a first subset of the first icons within the portion that is viewable to the user and a second subset of the first icons not within the portion that is viewable to the user, and
   wherein, to perform the geometric translation of the first icons, the processing circuitry is configured to:
   remove at least a first icon of the first subset of the first icons from the first portion that is viewable to the user; and
   add at least a second icon of the second subset of the first icons to the first portion that is viewable to the user.
8. The computing system of any preceding clause,
   wherein the user input comprises an indication to pin a position of the second icons arranged into the one or more second layers, and
   wherein the processing circuitry is configured to perform the geometric translation of the first icons arranged into the one or more first layers without performing the geometric translation of the second icons arranged into the one or more second layers based at least in part on the indication to pin the position of the second icons arranged into the one or more second layers.
9. The computing system of any preceding clause, wherein the user input comprises one or more of:
   a "click-and-drag" movement performed via an input device;
   a selection of a scroll icon provided by the user interface; or
   a directional input performed via the input device.
10. The computing system of any preceding clause, wherein each icon of the icons corresponds to a plurality of network elements of the network elements, the icon depicting a count of the plurality of network elements to which the icon corresponds.
11. The computing system of any preceding clause, wherein each icon of the icons depicts a count of alert messages for the corresponding network element of the network elements.
12. The computing system of any preceding clause, wherein, to output the user interface, the processing circuitry is configured to generate a web page comprising the user interface.
13. The computing system of any preceding clause, wherein the network system comprises a data center.
14. A method comprising:
   outputting, by processing circuitry of a computing system, for display at a display device, a user interface comprising an arrangement of icons into layers, wherein each icon of the icons corresponds to a network element of network elements of a network system, and wherein each of the layers corresponds to a topological layer of topological layers of the network elements within the network system;
   based at least in part on an indication of user input, modifying, by the processing circuitry, the arrangement of icons by performing a geometric translation of first icons of the icons arranged into one or
   more first layers of the layers without performing a geometric translation of second icons arranged into one or more second layers of the layers; and
   outputting, by the processing circuitry and for display at the display device, the user interface comprising the modified arrangement of icons.
15. The method of clause 14,
   wherein the layers comprise horizontal layers, and
   wherein performing the geometric translation of the first icons comprises performing a horizontal geometric translation of the first icons without performing a horizontal geometric translation of the second icons.
16. The method of clause 14 or clause 15,
   wherein the layers comprise vertical layers, and
   wherein performing the geometric translation of the first icons comprises performing a vertical geometric translation of the first icons without performing a vertical geometric translation of the second icons.
17. The method of any of clauses 14 to 16,
   wherein the user interface further includes one or more lines interconnecting one or more icons of the first icons arranged into the one or more first layers and one or more icons of the second icons arranged into the one or more second layers, the one or more lines corresponding to logical connections between corresponding network elements of the network elements within the network system, and
   wherein performing the geometric translation of the first icons comprises adjusting the one or more lines to maintain the interconnection between the one or more icons of the first icons and the one or more icons of the second icons.
18. The method of any of clauses 14 to 17, wherein the layers into which the icons are arranged comprise one or more of:
   a first layer comprising one or more first icons corresponding to one or more spine network devices of a spine layer of the topological layers;
   a second layer comprising one or more second icons corresponding to one or more leaf network devices of a leaf layer of the topological layers;
   a third layer comprising one or more third icons corresponding to one or more host computing devices of a host layer of the topological layers; and
   a fourth layer comprising one or more fourth icons corresponding to one or more client applications or
   services of a virtualization layer of the topological layers.
19. The method of any of clauses 14 to 18,
   wherein the user input comprises an indication to pin a position of the second icons arranged into the one or more second layers, and
   wherein performing the geometric translation of the first icons arranged into the one or more first layers without performing the geometric translation of the second icons arranged into the one or more second layers is based at least in part on the indication to pin the position of the second icons arranged into the one or more second layers.
20. Computer-readable media encoding instructions that, when executed, cause processing circuitry to:
   output, for display at a display device, a user interface comprising an arrangement of icons into layers,
   wherein each icon of the icons corresponds to a network element of network elements of a network system, and wherein each of the layers corresponds to a topological layer of topological layers of the network elements within the network system;
   based at least in part on an indication of user input, modify the arrangement of icons by performing a geometric translation of first icons of the icons arranged into one or more first layers of the layers without performing a geometric translation of second icons arranged into one or more second layers of the layers; and
   output, for display at the display device, the user interface comprising the modified arrangement of icons.

## Claims

1. A computing system comprising processing circuitry having access to a memory, the processing circuitry configured to:
output, for display at a display device, a user interface comprising an arrangement of icons into layers, wherein each icon of the icons corresponds to a network element of network elements of a network system, and wherein each of the layers corresponds to a topological layer of topological layers of the network elements within the network system;
based at least in part on an indication of user input, modify the arrangement of icons by performing a geometric translation of first icons of the icons arranged into one or more first layers of the layers without performing a geometric translation of second icons arranged into one or more second layers of the layers; and
output, for display at the display device, the user interface comprising the modified arrangement of icons.

2. The computing system of claim 1,
wherein the layers comprise at least one of horizontal layers or vertical layers, and
wherein, to perform the geometric translation of the first icons, the processing circuitry is configured to perform a horizontal geometric translation of the first icons without performing a horizontal geometric translation of the second icons or a vertical geometric translation of the first icons without performing a vertical geometric translation of the second icons.

3. The computing system of any of claims 1-2,
wherein the user interface further includes one or more lines interconnecting one or more icons of the first icons arranged into the one or more first layers and one or more icons of the second icons arranged into the one or more second layers, the one or more lines corresponding to logical connections between corresponding network elements of the network elements within the network system, and
wherein, to perform the geometric translation of the first icons, the processing circuitry is configured to adjust the one or more lines to maintain the interconnection between the one or more icons of the first icons and the one or more icons of the second icons.

4. The computing system of any of claims 1-3, wherein the topological layers of the network elements of the network system comprise:
a spine layer that includes one or more spine network devices of the network elements;
a leaf layer that includes one or more leaf network devices of the network elements;
a host layer that includes one or more host computing devices of the network elements; and
a virtualization layer that includes one or more client applications or services of the network elements.

5. The computing system of any of claims 1-4, wherein the layers into which the icons are arranged comprise one or more of:
a first layer comprising one or more first icons corresponding to one or more spine network devices of a spine layer of the topological layers;
a second layer comprising one or more second icons corresponding to one or more leaf network devices of a leaf layer of the topological layers;
a third layer comprising one or more third icons corresponding to one or more host computing devices of a host layer of the topological layers; and
a fourth layer comprising one or more fourth icons corresponding to one or more client applications or services of a virtualization layer of the topological layers.

6. The computing system of any of claims 1-5,
wherein the user interface comprises a portion that is viewable to the user, and wherein the first icons comprise a first subset of the first icons within the portion that is viewable to the user and a second subset of the first icons not within the portion that is viewable to the user, and
wherein, to perform the geometric translation of the first icons, the processing circuitry is configured to:
remove at least a first icon of the first subset of the first icons from the first portion that is viewable to the user; and
add at least a second icon of the second subset of the first icons to the first portion that is viewable to the user.

7. The computing system of any of claims 1-6,
wherein the user input comprises an indication to pin a position of the second icons arranged into the one or more second layers, and
wherein the processing circuitry is configured to perform the geometric translation of the first icons arranged into the one or more first layers without performing the geometric translation of the second icons arranged into the one or more second layers based at least in part on the indication to pin the position of the second icons arranged into the one or more second layers.

8. The computing system of any of claims 1-7, wherein the user input comprises one or more of:
a "click-and-drag" movement performed via an input device;
a selection of a scroll icon provided by the user interface; or
a directional input performed via the input device.

9. The computing system of any of claims 1-8, wherein each icon of the icons corresponds to a plurality of network elements of the network elements, the icon depicting a count of the plurality of network elements to which the icon corresponds.

10. The computing system of any of claims 1-9, wherein each icon of the icons depicts a count of alert messages for the corresponding network element of the network elements.

11. The computing system of any of claims 1-10, wherein, to output the user interface, the processing circuitry is configured to generate a web page comprising the user interface.

12. The computing system of any of claims 1-11, wherein the network system comprises a data center.

13. A method comprising:
outputting, by processing circuitry of a computing system, for display at a display device, a user interface comprising an arrangement of icons into layers, wherein each icon of the icons corresponds to a network element of network elements of a network system, and wherein each of the layers corresponds to a topological layer of topological layers of the network elements within the network system;
based at least in part on an indication of user input, modifying, by the processing circuitry, the arrangement of icons by performing a geometric translation of first icons of the icons arranged into one or more first layers of the layers without performing a geometric translation of second icons arranged into one or more second layers of the layers; and
outputting, by the processing circuitry and for display at the display device, the user interface comprising the modified arrangement of icons.

14. The method of claim 13, further comprising steps corresponding to the functionality recited in any of claims 2-12.

15. Computer-readable storage media comprising instructions that, when executed by one or more programmable processors, cause the one or more programmable processors to become configured to carry out the method of any of claims 13-14.
